# EUROPEAN PATENT APPLICATION

(11) **EP 4 528 191 A1**
(43) Date of publication of application: **26.03.2025**
(21) Application number: 22948072.8
(22) Date of filing: 23.06.2022
(51) Int. Cl.: F25D 29/00, F25D 23/02, F25D 27/00, G06F 3/043, G06F 3/0354, F21V 33/00, F21V 9/00

(54) **REFRIGERATOR AND CONTROL METHOD THEREFOR**

(71) Applicant: LG Electronics Inc., Yeongdeungpo-gu Seoul 07336 (KR)
(72) Inventor: SHIN, Yongchul, Seoul 06772 (KR); SON, Joohee, Seoul 06772 (KR); HONG, Jipyo, Seoul 06772 (KR); HA, Yoon, Seoul 06772 (KR); KIM, Minhyeok, Seoul 06772 (KR)
(74) Representative: Vossius & Partner Patentanwälte Rechtsanwälte mbB
(86) International application number: PCT/KR2022/008918
(87) International publication number: WO 2023/249138

(57) **Abstract**

One embodiment of the present invention provides a refrigerator comprising: a cabinet that forms at least one space; a display door that opens and closes the space and has a display panel for outputting information; first, second, and third doors that open and close the space and detect a knocking gesture; and a control unit that controls the display panel, wherein the control unit receives a knocking gesture detected from at least one of the first door, the second door, and the third door and operates on the basis of the received knocking gesture.

## Description

### [Technical Field]

The present disclosure relates to a refrigerator and a method for controlling a refrigerator.

### [Background]

In general, a refrigerator is a home appliance that allows food to be stored at a low temperature in an internal storage space that is shielded by a refrigerator door. The refrigerator may store the stored food in an optimal state by cooling an interior of the storage space using cold air generated via a heat exchange with a refrigerant circulating in a refrigeration cycle.

Such refrigerator is gradually becoming larger and more multifunctional in accordance with a change in a dietary habit and a trend of a luxury product, and a refrigerator having various structures and equipped with convenience devices in consideration of a user convenience is being released.

Technologies for varying an outer appearance of a refrigerator door front surface are being developed for harmony with an environment in which the refrigerator is placed or with surrounding furniture or home appliances, and such trend is taking place throughout the general home appliance.

U.S. Patent No. 8789900 (hereinafter, referred to as "Prior Document 1") discloses a structure in which a decor panel forming an outer appearance is mounted on the door front surface of the refrigerator. The decor panel is constructed to be detachable, thereby forming an outer appearance of the door front surface based on a user's preference.

However, in the refrigerator of Prior Document 1, when the user wants to change the outer appearance, an entirety of the decor panel must be removed and replaced, and the decor panel before the replacement is not able to be used any longer.

In order to solve such problem, Chinese Patent No. 103250018 (hereinafter, referred to as "Prior Document 2") discloses a refrigerator in which a reflective layer and a transparent panel are arranged on the door front surface of the refrigerator, and a light emitting member having a color is mounted on each of both ends of the reflective layer such that the transparent panel may emit light with a set color.

However, in the case of Prior Document 2, a technology for operating the light emitting member or controlling the operation of the light emitting member in the refrigerator is not disclosed.

### [Summary]

### [Technical Problem]

The present disclosure is directed to providing a refrigerator and a method for controlling the refrigerator in which a color of a door can be changed in order to solve one or more of the above problems.

### [Technical Solutions]

An embodiment of the present disclosure provides a refrigerator including a cabinet defining at least one space therein, a display door that opens and closes the space and is composed of a display panel that outputs information, a first door, a second door, and a third door that open and close the space and sense a knock gesture, and a controller that controls the display panel, wherein the controller receives the sensed knock gesture from at least one of the first door, the second door, and the third door, and performs an operation based on the received knock gesture.

The knock gesture may be sensed via a microphone sensor.

The microphone sensor may be mounted in at least one of the first door, the second door, the third door, and the display door.

The knock gesture may be sensed via a touch sensor.

The touch sensor may be mounted on at least one of the first door, the second door, the third door, and the display door.

The display door may sense the knock gesture, and the controller may control the display panel to operate in one of a transparent mode, a translucent mode, and an opaque mode, and
switch a mode of the display panel to the transparent mode when receiving a first knock gesture sensed via the display door.

At least one of the first door, the second door, and the third door may further include an internal camera that captures interior of the refrigerator, and the controller may, when a sensed second knock gesture is received from one of the first door, the second door, and the third door, output an internal image of the refrigerator corresponding to the door where the second knock gesture is sensed via the display panel.

The controller may output a user interface representing the refrigerator on the display panel, receive an input signal for selecting one of the first door, the second door, and the third door in the user interface, and
output an internal image of the refrigerator corresponding to the selected door on the display panel based on the input signal.

Each of the first door, the second door, and the third door may be equipped with a light source capable of rendering RGB colors, each of the first door, the second door, and the third door may include a front plate and a light guide plate guiding light to the front plate, the controller may irradiate light to the light guide plate using the light source, light irradiated to the light guide plate may pass through the front plate, and when the light source is turned on, the front plate may emit light with a color.

The controller may, when receiving a sensed third knock gesture from one of the first door, the second door, and the third door, change a color of the door where the third knock gesture is sensed.

The controller may output information on food located inside the refrigerator corresponding to the door where the third knock gesture is sensed on the display panel, based on the third knock gesture.

The controller may, when receiving the third knock gesture, change the color of the door where the third knock gesture is sensed based on the information on the food located inside the refrigerator corresponding to the door where the third knock gesture is sensed.

The controller may, when receiving a sensed fourth knock gesture from one of the first door, the second door, and the third door, change a color of the door mapped to the fourth knock gesture, wherein the fourth knock gesture is different from the third knock gesture.

The controller may, when receiving the fourth knock gesture, change a color of at least one partial area of the first door, the second door, and the third door, wherein the at least one partial area is an area mapped to the fourth knock gesture.

The light source included in at least one of the first door, the second door, and the third door may have one of a lower edge structure, a side edge structure, a lower-and-side edge structure, and a downward-directed structure.

An embodiment of the present disclosure provides a method for controlling a refrigerator including a cabinet defining at least one space therein, a display door that opens and closes the space and is composed of a display panel that outputs information, a first door, a second door, and a third door that open and close the space and sense a knock gesture, and a controller that controls the display panel, the method including receiving the sensed knock gesture from at least one of the first door, the second door, and the third door, and performing an operation based on the received knock gesture.

### [Advantageous Effects]

According to an embodiment of the present disclosure, the location and the state of the food stored in the refrigerator may be checked at a glance and managed more easily.

In addition, according to an embodiment of the present disclosure, the user may easily check the state inside the refrigerator without opening the refrigerator door via the knock gesture.

In addition, according to an embodiment of the present disclosure, the refrigerator may provide the different information depending on the location of the door on which the knock gesture is input.

Effects that may be obtained from the present disclosure are not limited to the effects mentioned above, and other effects not mentioned are able to be clearly understood by those skilled in the art in the technical field to which the present disclosure belongs from a description below.

### [Brief Description of the Drawings]

FIG. 1 is a perspective view of a refrigerator according to an embodiment of the present disclosure, and FIG. 2 is a front view with an open door of a refrigerator according to an embodiment of the present disclosure.
FIG. 3 is a perspective view of a refrigerator door according to an embodiment of the present disclosure, and FIG. 4 is a view showing a state in which a panel assembly is separated from a refrigerator door according to an embodiment of the present disclosure,.
FIG. 5 is a cross-sectional view taken along a line 5-5 in FIG. 4 according to an embodiment of the present disclosure, and FIG. 6 is a view showing an arrangement of a light guide plate and a light source according to an embodiment of the present disclosure,.
FIG. 7 is a block diagram showing a flow of a control signal of a refrigerator according to an embodiment of the present disclosure, FIG. 8 is a view showing a state in which some of doors are emitting light in a refrigerator according to an embodiment of the present disclosure, and FIG. 9 is a view showing a state in which all of a plurality of doors are emitting light in a refrigerator according to an embodiment of the present disclosure.
FIG. 10, including parts (a) and (b), and FIG. 11, including parts (a)-(d), are views for illustrating a display door having a transparent display panel according to an embodiment of the present disclosure.
FIG. 12, including parts (a)-(d), is a view for illustrating locations of a light guide plate and a light source of an LED door according to an embodiment of the present disclosure.
FIGS. 13a and 13b are views for illustrating a method for recognizing food in a refrigerator according to an embodiment of the present disclosure.
FIG. 14 is a view illustrating a food management user interface of a refrigerator according to an embodiment of the present disclosure.
FIGS. 15a and 15b are views illustrating an embodiment of changing a door color based on freshness of food in a refrigerator according to an embodiment of the present disclosure.
FIG. 16 is a view illustrating an embodiment of switching a mode of a display panel to a transparent mode based on a knock gesture in a refrigerator according to an embodiment of the present disclosure.
FIG. 17 is a view illustrating an embodiment of outputting an interior image of a refrigerator on a display panel based on a knock gesture in a refrigerator according to an embodiment of the present disclosure.
FIG. 18 is a view illustrating an embodiment of changing a color of a door on which a knock gesture is sensed in a refrigerator according to an embodiment of the present disclosure.
FIG. 19 is a view illustrating an embodiment of changing a color of a partial area of a door mapped to a knock gesture in a refrigerator according to an embodiment of the present disclosure.
FIG. 20 is a view illustrating an embodiment of outputting an internal image of a refrigerator via a user interface output on a display panel in a refrigerator according to an embodiment of the present disclosure.
FIG. 21 is a flowchart illustrating a method for controlling a refrigerator according to an embodiment of the present disclosure.

### [Best Mode]

Description will now be given in detail according to exemplary embodiments disclosed herein, with reference to the accompanying drawings. For the sake of brief description with reference to the drawings, the same or equivalent components can be provided with the same reference numbers, and description thereof will not be repeated. In general, a suffix such as "module" and "unit" can be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. can be used herein to describe various elements, these elements should not be limited by these terms. These terms are generally only used to distinguish one element from another.

It will be understood that when an element is referred to as being "connected with" another element, the element can be directly connected with the other element or intervening elements can also be present. In contrast, when an element is referred to as being "directly connected with" another element, there are no intervening elements present.

A singular representation can include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps can likewise be utilized.

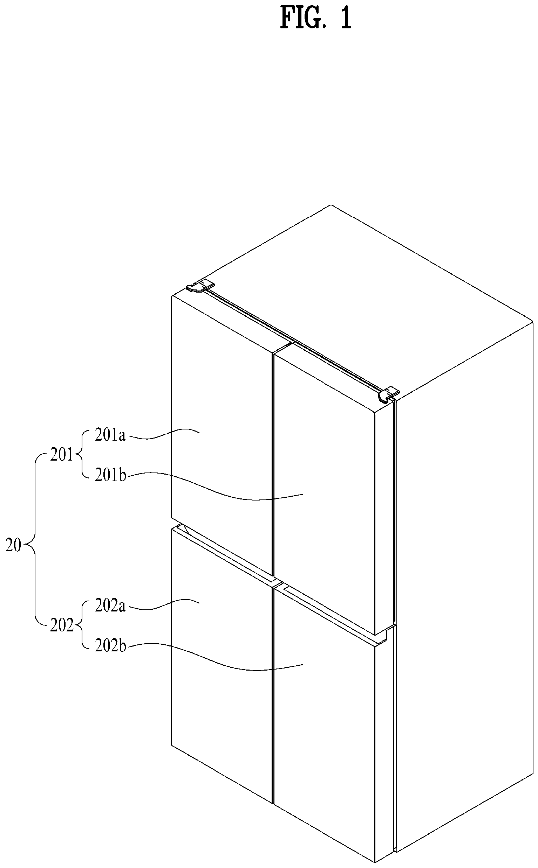

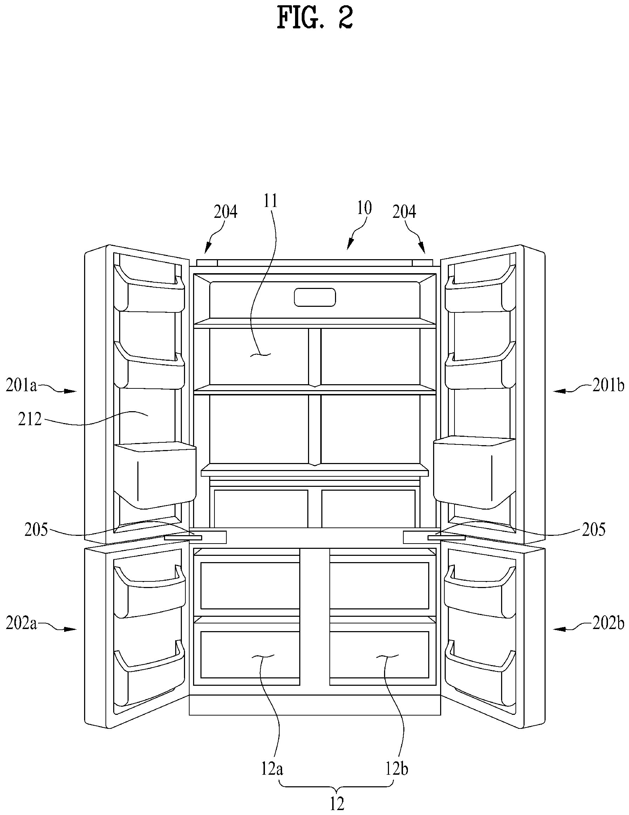

FIG. 1 is a perspective view of a refrigerator according to an embodiment of the present disclosure, and FIG. 2 is a front view with an open door of a refrigerator. Hereinafter, descriptions duplicate with those of the above drawings will be omitted.

Referring to FIG. 1, a refrigerator 1 according to an embodiment of the present disclosure can include a cabinet 10 for defining therein a storage space (or a storage section), and a door 20 that opens and closes the storage space of the cabinet 10.

In one embodiment, the cabinet 10 can define the storage space partitioned in a vertical direction, a refrigeration compartment can be defined at an upper portion of the storage space, and a freezer compartment can be defined at a lower portion of the storage space. The refrigeration compartment can be referred to as an upper storage space and the freezer compartment can be referred to as a lower storage space.

The door 20 can open and close each of the refrigeration compartment and the freezer compartment. In one embodiment, the door 20 can be pivotably mounted to the cabinet 10, and can open and close each of the refrigeration compartment and the freezer compartment by the pivoting. In one example, the door 20 can be constructed to open and close the refrigeration compartment and/or the freezer compartment by entry and exit.

The door 20 can include a refrigeration compartment door 201 for opening and closing the refrigeration compartment and a freezer compartment door 202 for opening and closing the freezer compartment. The refrigeration compartment door 201 can be referred to as an upper door, and the freezer compartment door 202 can be referred to as a lower door.

In the refrigeration compartment door 201, a pair of a left refrigeration compartment door and a right refrigeration compartment door can be arranged side by side. The left refrigeration compartment door and the right refrigeration compartment door can be pivoted independently of each other to open and close the refrigeration compartment. The left refrigeration compartment door and the right refrigeration compartment door can be disposed adjacent to each other and can have the same size.

In the freezer compartment door 202, a pair of a left freezer compartment door and a right freezer compartment door can also be arranged side by side. The left freezer compartment door and the right freezer compartment door can be pivoted independently of each other to open and close the freezer compartment. The left freezer compartment door and the right freezer compartment door can be disposed adjacent to each other and can have the same size.

In one example, in the present embodiment, for convenience of illustration and understanding, a refrigerator of a structure in which the refrigeration compartment is disposed above the freezer compartment is described as an example, but the present disclosure is able to be applied to any type of refrigerator equipped with a door without being limited to a shape of the refrigerator.

In one example, the door 20 can form an outer appearance of a front surface of the refrigerator 1 in a closed state, and can form an outer appearance of the refrigerator 1 viewed from the front in a state in which the refrigerator 1 is installed.

The door 20 can have a structure in which a front surface thereof can selectively emit light, and can be constructed to emit light with a set color or brightness. Accordingly, a user can allow a color or brightness of the front surface of the door 20 to be changed without removing or disassembling the door 20, and can change an overall outer appearance of the refrigerator 1.

Hereinafter, a structure of the door 20 will be described in detail with reference to the drawings.

In one embodiment of the present disclosure, a left refrigeration compartment door 201a and the freezer compartment door 202 have the entirely same structure except that locations and sizes thereof are different from each other. Such doors 201a and 202 can be referred to as panel doors or first doors.

A right refrigeration compartment door 201b can have a structure different from that of the doors 201a and 202, and can have a structure capable of seeing through a rear space, that is, a space in the refrigerator. Accordingly, the right refrigeration compartment door 201b can be referred to as a transparent door, a see-through door, or a second door. Hereinafter, the right refrigeration compartment door 201b will be mainly described.

In addition, in one embodiment, the right refrigeration compartment door 201b can be equipped with an Android-applied display. In this case, the right refrigeration compartment door 201b can correspond to both the transparent door and a display door. In this regard, the right refrigeration compartment door 201b can be referred to as the display door.

In one example, all the doors can be constructed as non-see-through doors (panel doors).

In the present embodiment, the case in which one see-through door is disposed is described as an example, but a plurality of see-through doors can be arranged. In addition, the see-through door can be disposed at a location other than the right refrigeration compartment door 201b.

The right refrigeration compartment door 201b can include a main door and a sub door. The main door can be pivotably mounted to the cabinet 10 and can open and close a refrigeration compartment 11 by the pivoting. The main door can have an opening extending through the main door. The opening can be defined to extend through a remaining portion except for a perimeter of the main door, and at least a portion of the opening can define a portion of the storage space in the refrigerator.

The main door can be equipped with the sub door. The sub door can be pivotably mounted on the main door, and can open and close the opening. In this regard, the sub door can be formed to have the same size as the main door, and an outer appearance of a front surface of the right refrigeration compartment door can be formed by the sub door when viewed from the front.

That is, the sub door can form an outer appearance of a front surface of the right refrigeration compartment door 201b, and can have the same color as the doors 201a and 202 based on an operation of a lighting device 36. The sub door can visualize an interior of the opening or the space inside the refrigerator based on manipulation of the user. To this end, a see-through region can be defined in the sub door. The see-through region can appear selectively, and when the see-through region does not appear, the sub door can emit light of the set color to form the outer appearance of the front surface of the sub door. The see-through region can be variously referred to as a visualizing portion, a see-through window, a window, and the like.

An expiration date of a stored food was able to be recognized using a camera of the refrigerator, and such information was able to be displayed via the display, but there was a problem in that it was difficult to accurately indicate a location or a state of the corresponding food.

Accordingly, in the present disclosure, the exact location and the detailed state can be accurately and intuitively displayed as an LED panel that expresses color via a front surface panel, the camera, and a display panel are in association with each other.

To this end, the present disclosure is to express information related to the refrigerator and the food via the LED panel of the refrigerator to be easily recognized by the user.

In addition, the present disclosure is to effectively view and manage the information and the state of the stored food using the camera, the display panel, and the LED panel mounted on the refrigerator.

In addition, the present disclosure is to propose an optimal location of the food to be received using the camera, the display panel, and the LED panel mounted on the refrigerator.

To this end, the refrigerator of the present disclosure includes at least one panel, and in particular, includes four panels. One of the four panels is equipped with the Android-applied display, and the other three panels have a colored LED lighting-capable structure. Accordingly, the present disclosure is to propose a technology for inputting food information and expiration date information of the food stored in the refrigerator via an internal/external camera or a direct input from the user, and changing a panel color of a corresponding door as the expiration date approaches.

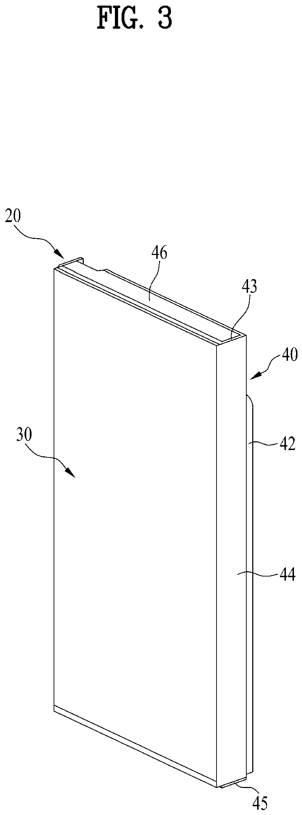

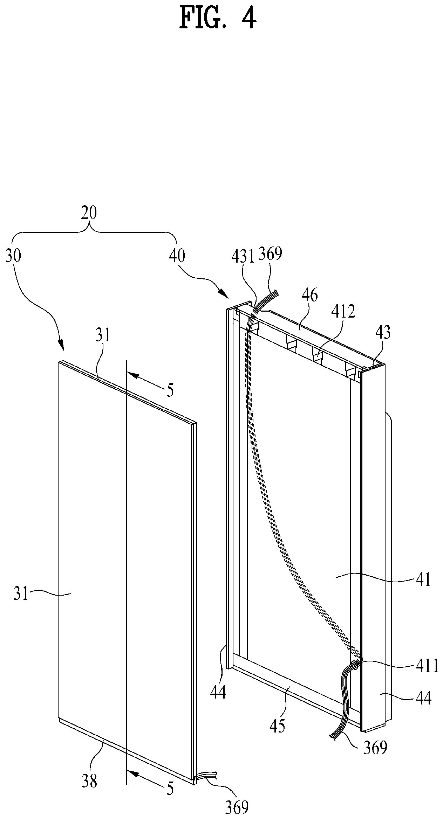

FIG. 3 is a perspective view of a refrigerator door according to an embodiment of the present disclosure, and FIG. 4 is a view showing a state in which a panel assembly is separated from a refrigerator door. Hereinafter, descriptions duplicate with those of the above drawings will be omitted.

Referring to FIGS. 3 and 4, the door 20 can include a door body 40 that forms an overall shape of the door 20, and a panel assembly 30 that forms an outer appearance of a front surface of the door 20. That is, the door 20 can be constructed such that the panel assembly 30 is mounted on a front surface of the door body 40. A mounting portion 412 for mounting the panel assembly 30 can be disposed at an upper end of the front surface of the door body 40.

The door body 40 can include a body plate 41 that forms the front surface thereof, and a door liner 42 that forms a rear surface thereof.

The body plate 41 can be made of, for example, a metal material, and can be formed in a plate shape having a size corresponding to that of the panel assembly 30. The door liner 42 can be made of, for example, a plastic material, and can form a rear surface shape of the door 20.

The door body 40 can further include side decors 44 that form left and right side surfaces of the door body 40. The side decors 44 can connect left and right side ends of the body plate 41 and left and right side ends of the door liner 42 to each other.

The door body 40 can further include an upper cap decor 43 and a lower cap decor 45 that form a top surface and a bottom surface of the door body 40, respectively. The upper cap decor 43 can be connected to upper ends of the side decors 44, an upper end of the body plate 41, and an upper end of the door liner 42. The lower cap decor 45 can be connected to lower ends of the side decors 44, a lower end of the body plate 41, and a lower end of the door liner 42.

The outer appearance of the door body 40 can be formed by the body plate 41, the door liner 42, the side decors 44, the upper cap decor 43, and the lower cap decor 45. A cap decor cover 46 can be coupled to the upper cap decor 43.

A space inside the door body 40 formed by the coupling of the body plate 41, the door liner 42, the side decors 44, the upper cap decor 43, and the lower cap decor 45 can be filled with an insulating material, and can have a structure that can be insulated such that a heat transfer is not achieved via the door 20. The insulating material can be formed, for example, as a foaming liquid is filled and then cured. The door body 40 can have an inlet to be filled with the foaming liquid.

In one example, the panel assembly 30 can be inserted into the front surface of the door body 40 from the front. As an example, the side decors 44 can protrude further forward, and can be in contact with both side ends of the panel assembly 30, respectively.

The panel assembly 30 can be generally formed in a plate shape, and can be formed in a size corresponding to that of the front surface of the door body 40. Therefore, when the panel assembly 30 is mounted on the front surface of the door body 40, the panel assembly 30 can shield the front surface of the door body 40 to form the outer appearance of the front surface of the door 20. Because the panel assembly 30 forms the outer appearance of the front surface of the door 20, the panel assembly 30 can be referred to as a door panel, and because the panel assembly 30 forms the outer appearance of the front surface of the refrigerator 1, the panel assembly 30 can also be referred to as an exterior panel.

In the state in which the panel assembly 30 is mounted on the door body 40, a rear surface of the panel assembly 30 can be closely fixed to the body plate 41. The panel assembly 30 can have a structure detachable from the door body 40 for service and maintenance.

A front surface of the panel assembly 30 can be exposed to the front in the state in which the panel assembly 30 is mounted on the door body 40, and can form a substantial outer appearance of the front surface of the door 20. The panel assembly 30 can be constructed to emit light from an entirety of the front surface thereof, and can be constructed to emit light with various colors.

To this end, the lighting device 36 can be disposed inside the panel assembly 30. The lighting device 36 can be connected to an electric wire 369 for supply and control of power.

The electric wire 369 can be composed of multiple wire-type electric wires, and can be connected to the lighting device of the panel assembly 30.

One end of the electric wire 369 can be connected to the lighting device 36, and the electric wire 369 can be introduced inwardly of the door body 40 through an electric wire hole 411 defined in the front surface of the door body 40, and can be withdrawn to the outside of the door body 40 through a hinge mounting portion 431 at an upper end of the door body 40. The electric wire hole 411 can be opened through the body plate 41.

An upper hinge 204 can be mounted in the hinge mounting portion 431, and the electric wire 369 can be guided to the cabinet 10 via the upper hinge 204 to be connected to a controller 13 disposed in the cabinet 10.

The electric wire 369 can have a structure connected by a connector at a location between the panel assembly 30 and the door body 40. Accordingly, when the panel assembly 30 is detached or mounted from or on the door body 40, the electric wire 369 can be easily connected.

Hereinafter, a structure of the panel assembly 30 will be described in detail with reference to the drawings.

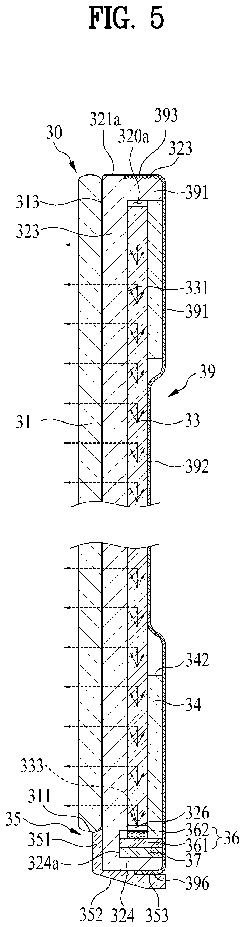

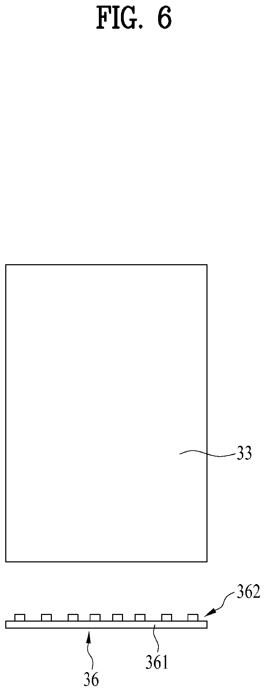

FIG. 5 is a cross-sectional view taken along a line 5-5 in FIG. 4, and FIG. 6 is a view showing an arrangement of a light guide plate and a light source. Hereinafter, descriptions duplicate with those of the above drawings will be omitted.

Referring to FIGS. 5 and 6, the panel assembly 30 can include a front plate 31 forming the outer appearance of the front surface thereof, the lighting device 36 irradiating light such that the front plate 31 emits light, and a light guide plate 33 guiding the light irradiated from the lighting device 36.

The panel assembly 30 can include a diffusing member 32 that allows the light guide plate 33 and the front plate 31 to be spaced apart from each other and diffuses light. The diffusing member 32 can also be referred to as a support member in an aspect that the diffusing member 32 supports the light guide plate 33.

The lighting device 36 and the light guide plate 33 can be mounted in or supported by the diffusing member 32.

The panel assembly 30 can further include a back cover 39 forming a rear surface of the panel assembly 30.

The front plate 31 can be formed in a rectangular plate shape, and can be made of a material capable of transmitting light. For example, the front plate 31 can be made of a glass material, such as blue glass, white glass, and deposited glass, or another material capable of transmitting light, such as ABS, PMMA, PC, and the like. The front plate 31 can be referred to as a transparent plate or an out plate.

The front plate 31 can be formed to be transparent such that light reflected by the light guide plate 33 can be transmitted therethrough. In this regard, transparency can be defined as a degree to which the light reflected from the light guide plate can be transmitted through the front plate 31 and irradiated to the outside.

The front plate 31 can be formed to have a color, and can be formed to exhibit a different color depending on the operation or an on/off state of the lighting device 36. For example, a specific design or pattern can be printed on the front plate 31 to have a specific color. A film printed with the pattern having the specific design or color can be attached to the front plate 31, a surface treatment, such as imprinting, etching, or glass printing, can be performed on the front plate 31, or a coating or deposition layer having a specific color and texture can be formed to form an outer appearance of the front plate 31.

The front plate 31 can be constructed such that the light irradiated from the lighting device 36 is transmitted therethrough but components at the rear of the front plate 31 are not reflected. That is, the front plate 31 can prevent components inside the panel assembly 30 from being seen outside through the front plate 31 by the color of the front plate 31 itself when the lighting device 36 is turned off.

In this regard, the front plate 31 can be formed to have a color that is at least not black and has a brightness equal to or higher than 0 when the lighting device 36 is turned off. That is, in the state in which the refrigerator 1 is installed, the front surface of the refrigerator 1 can exhibit a color other than the black, and the color of the front surface of the refrigerator can be changed based on the operation of the lighting device 36.

In the panel assembly 30, an entirety of the front surface of the front plate 31 can be exposed to the outside. Therefore, because an entirety of the light diffused by the diffusing member 32 can pass through the front plate 31, the entirety of the front surface of the front plate 31 can emit light.

A rear surface of the front plate 31 can be coupled to a front surface of the diffusing member 32.

The light guide plate 33 can be spaced apart from and located at the rear of the front plate 31 by the diffusing member 32, and can guide the light irradiated from the lighting device 36 disposed below the light guide plate 33 to the front.

For example, the light guide plate 33 can be made of a transparent polymer material such as acrylic. In the light guide plate 33, a diffusing agent for diffusing the light incident on the light guide plate 33 can be added, or a pattern for diffusing the light can be formed. Therefore, the light can be transmitted to the front plate 31 by the light guide plate 33. In this regard, the pattern of the light guide plate 33 can be set such that the entirety of the front surface of the front plate 31 can emit light with uniform brightness.

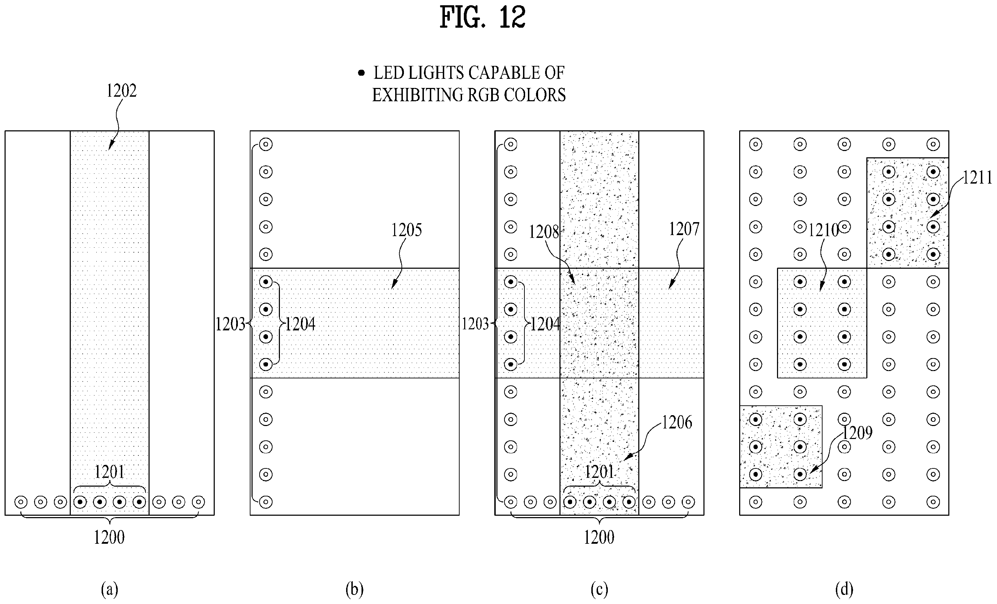

In this regard, various structures of the light guide plate 33 and the lighting device 36 that can be achieved in one embodiment of the present disclosure will be described in detail with reference to FIG. 12 below.

A load of the light guide plate 33 can be supported by the diffusing member 32, and the front surface of the light guide plate 33 can be pressed toward the diffusing member 32 by the back cover 39.

In one example, the diffusing member 32 can be disposed between the front plate 31 and the light guide plate 33. The diffusing member 32 can keep the light guide plate 33 at a certain spacing from the front plate 31, and can diffuse the light irradiated from a light exit surface of the light guide plate 33.

The diffusing member 32 can include a plate-shaped front surface 321 on which the front plate 31 is mounted, and an extended portion extending from a perimeter of the front surface 321. The front surface 321 and the extended portion can define therein an accommodating space 320a for the light guide plate 33 to be located.

The extended portion can be disposed to cover the perimeter of the light guide plate 33. The perimeter of the light guide plate 33 can include, for example, a top surface, a bottom surface, and both side surfaces of the light guide plate 33.

As an example, the extended portion can include an upper extended portion 322 extending from an upper end of a rear surface of the front surface 321, a lower extended portion 324 extending from a lower end of the rear surface of the front surface 321, and a pair of side surfaces extending from both left and right side ends of the front surface 321.

The upper extended portion 322, the lower extended portion 324, and the pair of side surfaces can define therein the accommodating space 320a for the light guide plate 33 to be located. Therefore, the diffusing member 32 can serve to not only diffuse the light, but also to accommodate and support the light guide plate 33 therein.

The front surface 321 can be formed in the plate shape corresponding to the front plate 31, and the front surface of the light guide plate 33 can be in close contact with a rear surface of the front surface 321.

In the present embodiment, because the front surface 321 of the diffusing member 32 is entirely disposed between the front plate 31 and the light guide plate 33, even when the light guide plate 33 is deformed by heat, the light guide plate 33 can be prevented from being in direct contact with the front plate 31. Accordingly, an occurrence of dark areas such as stains on the front plate 31 can be prevented.

The front surface 321 and the rear surface of the front plate 31 can be coupled to each other by an adhesive portion 313. The adhesive portion 313 can include, for example, a sealant or a double-sided tape.

The side surfaces can extend rearwards from the both left and right side ends of the front surface 321 to constrain the left and right side surfaces of the light guide plate 33. The side surfaces can be spaced apart from at least one of the left and right side surfaces of the light guide plate 33. When the light guide plate 33 moves in a left and right direction, the side surfaces can be in contact with and constrain at least one of the left and right side surfaces.

Each of the upper extended portion 322 and the lower extended portion 324 can extend rearwards from the front surface 321, and a length of each of the upper extended portion 322 and the lower extended portion 324 can be greater than a thickness of the light guide plate 33.

The diffusing member 32 can be made of a material capable of transmitting and diffusing the light, and can be formed by being injection-molded or extruded as a single component.

An entirety of the diffusing member 32 can be made of a transparent or translucent material. The diffusing member 32 itself can be formed to have a color. Therefore, when viewing the panel assembly 30 from the front, the color, a texture, or a shape of the front surface of the panel assembly 30 can be determined by the diffusing member 32.

The diffusing member 32 can further include a light guide plate support 326 for supporting a bottom surface 333 of the light guide plate 33. The light guide plate support 326 can extend rearwards from the rear surface of the front surface 321, and can be disposed above the lower extended portion 324 to be spaced apart from the lower extended portion 324.

In order to stably support the load of the light guide plate 33, the diffusing member 32 can include a plurality of light guide plate supports 326. A plurality of light guide plate supports 326 can be arranged to be spaced apart from each other in a horizontal direction.

The diffusing member 32 can accommodate the lighting device 36 therein. The diffusing member 32 can include an accommodating groove (or an accommodating portion) 324a for accommodating a portion of the lighting device 36 therein.

The accommodating groove 324a can be defined as a portion of the rear surface of the front surface 321 is depressed forward. The accommodating groove 324a can be located between the light guide plate support 326 and the lower extended portion 324. Accordingly, when the lighting device 36 is accommodated in the accommodating groove 324a, the lighting device 36 can be located below the light guide plate support 326.

The lighting device 36 can include a substrate 361 and a light source 362. The substrate 361 can be formed in a plate shape, and can be formed long in the left and right direction.

A plurality of light sources 362 can be continuously arranged at a regular spacing on the substrate 361. The light source 362 can be disposed to irradiate light toward the bottom surface 333 of the light guide plate 33. That is, the bottom surface 333 of the light guide plate 33 is a light entrance surface, and a front surface 331 of the light guide plate 33 is the light exit surface.

The substrate 361 can provide a space for the light sources 362 to be continuously arranged from a left end to an opposite end of the light guide plate 33.

The light source 362 can be disposed vertically below the bottom surface 333 of the light guide plate 33, that is, disposed to face the bottom surface 333 of the light guide plate 33.

The light source 362 can be constructed as an LED, for example. The light source 362 can be constructed as an RGB LED capable of irradiating light of various colors under control of a controller 13, which will be described later. That is, the light source 362 can irradiate the light of the various colors under the control of the controller 13, which will be described later, and thus, the front plate 31 can emit the light with the color set by the controller 13. The outer appearance color of the front surface of the refrigerator 1 can be determined based on the color of the front plate 31.

The light source 362 can be constructed as an LED irradiating light of a specific color other than the RGB LED, or can be constructed as a combination of a plurality of LEDs irradiating light of different colors.

For example, the plurality of light sources 362 can be constructed as red, green, and blue LEDs, and can be repeatedly arranged in an order. Under the control of the controller 13, operations of the light sources 362 can be combined with each other to make the front plate 31 emit light of a desired color.

The panel assembly 30 can further include a substrate supporter 37 seated on the lower extended portion 324 of the diffusing member 32.

The substrate supporter 37 can support the substrate 361 in the state of being seated on the lower extended portion 324. The substrate supporter 37 can dissipate heat generated from the lighting device 36 by conduction.

A portion of the substrate supporter 37 can be accommodated in the accommodating groove 324a. The substrate supporter 37 can be in contact with the back cover 39 in a state in which the back cover 39 is assembled. Accordingly, the heat generated from the lighting device 36 can be transferred to the back cover 39 via the substrate supporter 37, and can be dissipated via the back cover 39.

The panel assembly 30 can further include a rear supporter 34 for supporting the rear surface of the light guide plate 33. The rear supporter 34 can be formed in a plate shape and can be attached to the rear surface of the light guide plate 33 by the adhesive portion.

The rear supporter 34 can be made of an opaque material that limits the transmission of light. The rear supporter 34 can be accommodated in the accommodating space 320a defined by the diffusing member 32. The upper extended portion 322 can cover a top surface of the rear supporter 34, and the side surfaces 327 and 328 can cover both side surfaces of the rear supporter 34.

The light irradiated from the light source 362 can be effectively irradiated toward the light guide plate 33, and the light reflected via the light guide plate 33 can make the front plate 31 emit light with a set brightness.

The rear supporter 34 can include an opening 342 through which a portion of the back cover 39 extends. The back cover 39 can include a cover body 391 and a bent portion extending from an edge of the cover body 391 in the horizontal direction.

The cover body 391 can be in contact with a rear surface of the rear supporter 34. The cover body 391 can be attached to the rear supporter 34 by the adhesive portion or can be coupled to the rear supporter 34 by a fastening member such as a screw.

The bent portion can extend from the edge of the cover body 391 forward, and can include an upper bent portion 393, a lower bent portion 396, and a pair of side bent portions. The bent portion can be in contact with the diffusing member 32. The bent portion can be adhered to the extended portion of the diffusing member 32 by the adhesive portion, for example.

For example, the upper bent portion 393 can be seated in an upper seating groove 323 in a depressed shape defined in the upper extended portion 322 of the diffusing member 32.

The lower bent portion 396 can be in contact with a bottom surface of the lower extended portion 324 of the diffusing member 32. The side bent portion can be seated in a side seating groove of the depressed shape defined in the side extended portion.

In the present embodiment, because the diffusing member 32 supports the light guide plate 33 and fixes the location of the light guide plate 33, and the back cover 39 is coupled to surround a portion of the diffusing member 32, the number of parts of the panel assembly 30 itself can be reduced and a thickness in a front and rear direction of the panel assembly 30 can be reduced.

The cover body 391 can further include a pressing portion 392 bent toward the light guide plate 33. The pressing portion 392 can extend through the opening 342 of the rear supporter 34 to be in contact with the rear surface of the light guide plate 33.

In the present embodiment, the cover body 391 can press the rear supporter 34 toward the rear surface of the light guide plate 33 in the state of being in contact with the rear surface of the rear supporter 34, and the pressing portion 392 can directly press the light guide plate 33.

The panel assembly 30 of the present embodiment can further include a lower trim 35. The lower trim 35 can be coupled to the diffusing member 32 by coupling means such as an adhesive portion or a hook.

The lower trim 35 can include a first portion 351 extending in the vertical direction and a second portion 352 extending in the horizontal direction from a lower end of the first portion 351. At least the first portion 351 can be formed to be opaque or translucent, and can be formed to have a specific color when necessary.

The first portion 351 can cover a portion of the diffusing member 32 extending downwardly of the bottom surface 311 of the front plate 31. For example, the first portion 351 can be disposed in front of the accommodating groove 324a of the diffusing member 32 to face the accommodating groove 324a.

The second portion 352 can support the lower extended portion 324. The second portion 352 can include therein a seating groove 393 in which the lower bent portion 396 of the back cover 39 is seated.

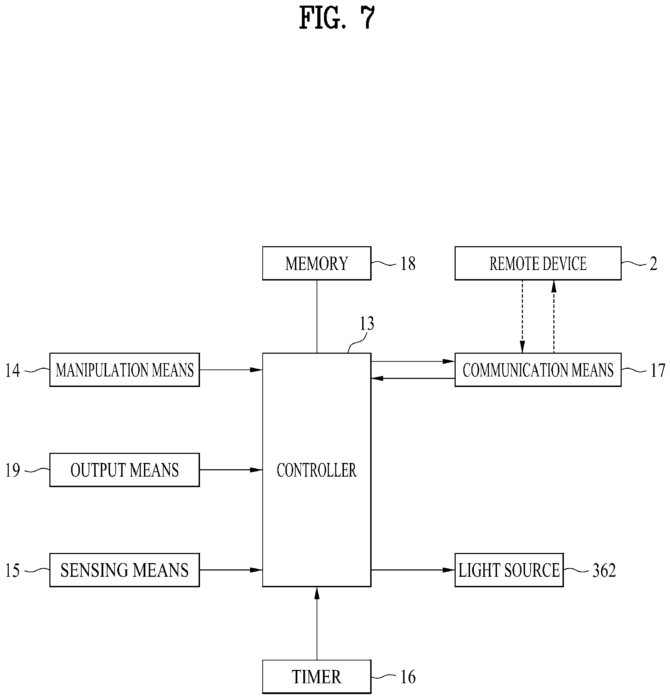

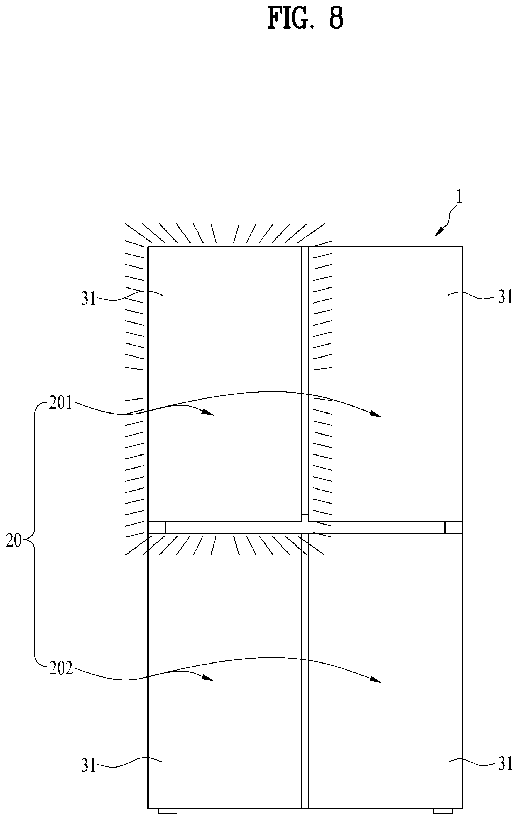

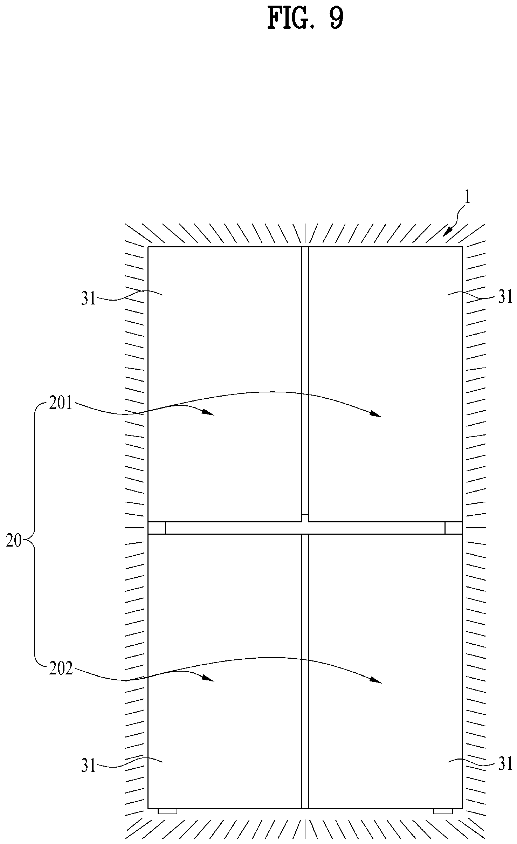

FIG. 7 is a block diagram showing a flow of a control signal of a refrigerator according to an embodiment of the present disclosure, FIG. 8 is a view showing a state in which some of doors are emitting light in a refrigerator according to an embodiment of the present disclosure, and FIG. 9 is a view showing a state in which all of a plurality of doors are emitting light in a refrigerator according to an embodiment of the present disclosure. Hereinafter, descriptions duplicate with those of the above drawings will be omitted.

In the refrigerator 1 according to the embodiment of the present disclosure, the front surface of the door 20 can emit light by the operation of the lighting device 36.

The front surface of the door 20 can emit light with one of a plurality of colors under the control of controller 13. The operation of the lighting device 36 can be achieved via user's manipulation of manipulation means 14. The manipulation means 14 can be disposed at one side of the refrigerator 1, for example, at one side of the cabinet 10. In one example, the manipulation means 14 can be disposed on the door 20 as needed, and can be pressed by manipulation of touching the front plate 31. In other words, the user can set the operation of the lighting device 36 by directly manipulating the manipulation means 14, and can also turn the lighting device 36 on or off.

The user can set an operation state of the lighting device 36, such as an operation time and an operation condition of the lighting device 36, a color of light emitted from the light source 362, and the like, via the manipulation of the manipulation means 14. In addition, various commands related to the operation of the refrigerator can be input via the manipulation of the manipulation means 14. When necessary, the manipulation means 14 can be constructed as a display on which display of information and manipulation are possible.

The operation of the lighting device 36 can be manipulated and the operation condition and the like of the lighting device 36 can be set via a remote device 2 that is spaced apart from the refrigerator 1. The refrigerator 1 can be in communication with the remote device 2 via communication means 17 connected to the controller 13, and the user can control the operation of the lighting device 36 via the remote device 2.

The communication means 17 can be in communication with the remote device 2 and/or a server managing a home appliance in various manners. For example, the communication means 17 can have a structure capable of communicating in at least one of wired, wireless, and short-range communication (BLUETOOTH, Wi-Fi, ZIGBEE, NFC, and the like) manners. The remote device 2 can be various devices capable of communicating, such as a dedicated terminal, a mobile phone, a tablet, a portable PC, a desktop PC, a remote control, and a Bluetooth speaker.

The user can manipulate and set the operation state of the lighting device 36, such as the operation time and the operation condition of the lighting device 36, the color of the light emitted from the light source, and the like, via the manipulation of the remote device 2. For example, easy manipulation and setting can be possible via an application or a dedicated program installed on the user's mobile phone.

The refrigerator 1 can further include a timer 16. The timer 16 can count a time elapsed after an occurrence of a specific event.

In one example, the lighting device 36 can be operated by a result of sensing by the sensing means 15.

The sensing means 15 can include, for example, a user detection sensor that senses proximity of the user. As the user detection sensor, various devices capable of sensing that the user approaches the refrigerator, such as an infrared sensor, an ultrasonic sensor, or a laser sensor, can be used.

The user detection sensor can be disposed at one side of the cabinet 10 or the door 20, and can be disposed at various locations for sensing the proximity of the user. The user detection sensor can include a plurality of sensors located at different locations. Therefore, when the user approaches the refrigerator 1 by a reference distance for use of the refrigerator 1, the user detection sensor can sense the approach, transmit a signal to the controller 13, and allow the lighting device 36 to be turned on. When the user moves away from the refrigerator 1, the user detection sensor can sense the same, transmit a signal to the controller 13, and allow the lighting device 36 to be turned off.

The refrigerator can further include output means 19. The output means 19 can include, for example, a speaker for outputting a sound. Voices, various sounds, or music can be output from the speaker. The output means 19 can be disposed on the door or on the cabinet.

The speaker can be operated by directly communicating with the remote device, and the operation thereof can be controlled by the controller 13. In one example, when describing the operation state of the lighting device operated by the controller 13, as shown in FIG. 6, when the lighting device 36 is turned on in response to instruction of the controller 13, the light irradiated from the light source 362 can be irradiated to the bottom surface 333 of the light guide plate 33, and can be guided along the light guide plate 33.

In this regard, the light guided by the light guide plate 33 can pass through the light exit surface, diffuse through the front surface 321, and then pass through the front plate 31 to be transmitted to the outside. Accordingly, an entirety of the front plate 31 can brightly emit light, and the front surface of the door 20 can emit light with the set brightness or color.

When the lighting device 36 is turned on, the front surface of the door 20 can brightly emit light, and the front surface of the door 20 can emit light with the set color by the light irradiated from the light source 362. In this regard, the color of the front surface of the door 20 can be different in color or brightness from a color in the state in which the lighting device 36 is turned off.

That is, the color of the front plate 31 can be seen as the color of the front surface of the door 20, and a texture and a pattern formed on the front plate 31 can be seen. In this regard, the color of the front plate 31 can be a color with a brightness higher than 0, and can be a color other than the black. The color of the front surface of the door 20 in the state in which the lighting device 36 is turned off can be referred to as a first color (or a background color).

Therefore, the front surface of the door 20 will be seen with the color of the front plate 31. In this regard, because of the color of the front plate 31, components inside the panel assembly 30 are not be seen from the outside through the front plate 31.

In such state, the lighting device 36 can be turned on. When the lighting device 36 is turned on, the front surface of the door 20 will emit light with the color set by the controller 13.

The front surface of the door 20 can be controlled to emit light with a second color different from the first color, and the lighting device 36 can control the light source 362 such that the door 20 can emit light with the second color under the control of the controller 13.

In this regard, a color of the light irradiated from the light source 362 can be different from the second color. That is, because the front plate 31 has the first color, when the light of the second color is irradiated from the light source 362, the light can interact with the first color in the process of passing through the front plate 31, so that the door 20 can actually emit light with a third color.

Therefore, in the present embodiment, controlling the light source 362 such that the door 20 emits light with a specific color can mean controlling the color of the light irradiated from the light source 362 in consideration of the color of the front plate 31 itself.

That is, in the state in which the light source 362 is turned on, the color of the light emitted from the door 20 can be a color in which the color of the front plate 31 itself and the color of the light irradiated from the light source 362 are mixed with each other.

In one example, some doors 20 among the plurality of doors 20 forming the outer appearance of the front surface of the refrigerator 1 can emit light, or the plurality of door 20 can independently emit light to form the outer appearance of the front surface of the refrigerator 1 with the set color.

The refrigerator 1 can be operated such that some doors 20 of the plurality of doors emit light or emit light with a specific color. That is, the lighting devices 36 arranged in the doors 20 may not all be operated, but only some of the entire doors 20 can emit light. For example, one of the refrigeration compartment doors 201 can emit light.

The left refrigeration compartment door and the right refrigeration compartment door can emit light in different colors as required. At least two doors 20 among the doors 20 can be sequentially changed in color, and at least two doors 20 can be sequentially turned on and off.

In this regard, the lighting device 36 disposed in the panel assembly 30 can be controlled by the controller 13 under the various conditions described above.

In one example, the refrigeration compartment door and the freezer compartment door among the doors can be controlled to emit light in different colors.

The controller 13 can control the lighting devices 36 such that the pair of refrigeration compartment doors 201 are seen in the first color. The controller 13 can control the lighting devices 36 such that the pair of refrigeration compartment doors 201 are seen in the second color.

In one example, operation control of the lighting device 36 to be described below is not limited to the structure of the panel assembly or the structure of the door described above. That is, at least one of the plurality of components constituting the panel assembly can be omitted, at least one of the plurality of components can be replaced with another component, or a location of at least one component of the plurality of components can be changed.

Herein, the change in the state of the light source 362 can include at least one of the change in the state of the light source 362 from the off state to the on state, the change in the state of the light source 362 from the on state to the off state, one or more LEDs being turned on from the state in which the light source 362 is turned off, the light source 362 being turned off from the state in which the one or more LEDs are turned on, a change in brightness of the light irradiated from the light source 362 in the state in which the light source 362 is turned on, a change in brightness or color of light irradiated from some of the plurality of LEDs in the state in which the light source 362 is turned on, a change in the number of LEDs that are turned on (an increase in the number of LEDs that are turned on or a decrease in the number of LEDs that are turned on), and a change in the color of the light irradiated from the light source 362 in the state in which the light source 362 is turned on.

The state in which the light source 362 is turned on means a state in which all of the plurality of LEDs are turned on, and the state in which the light source 362 is turned off means a state in which all of the plurality of LEDs are turned off.

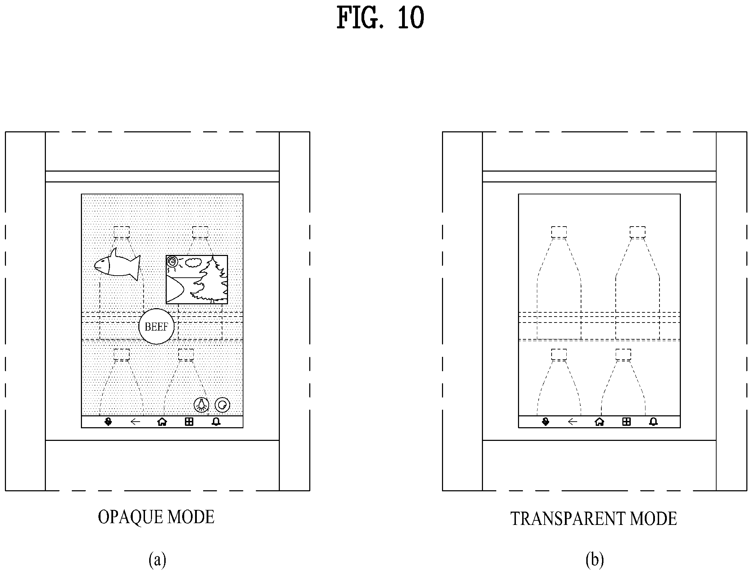

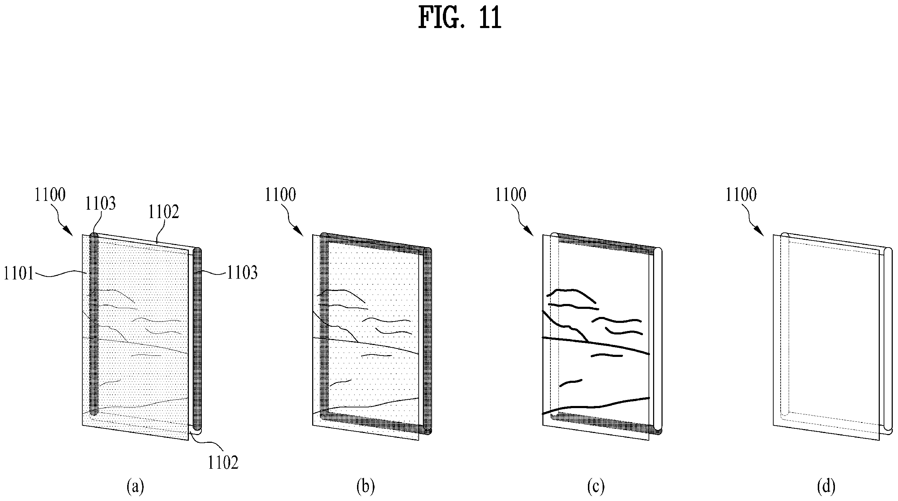

FIGS. 10 and 11 are views for illustrating a display door having a transparent display panel according to an embodiment of the present disclosure. Hereinafter, descriptions duplicate with those of the above drawings will be omitted.

As described above in FIGS. 1 and 2, the right refrigeration compartment door 201b of the refrigerator can be equipped with the Android-applied display, and the Android-applied display can use a transparent display panel that can switch between a transparent mode, a translucent mode, and an opaque mode.

A left view in FIG. 10 shows an embodiment in which the display panel included in the display door operates in the opaque mode, and a right view in FIG. 10 shows an embodiment in which the display panel included in the display door operates in the transparent mode.

When the display panel operates in the opaque mode as shown in the left view in FIG. 10, because the display door is operated with the Android-applied display, various user interfaces can be output on the display panel.

On the other hand, when the display panel operates in the transparent mode as shown in the right view in FIG. 10, the user can check the inside of the refrigerator through the display door.

(a) in FIG. 11 is a view illustrating the transparent mode, (b) in FIG. 11 is a view illustrating the translucent mode, (c) in FIG. 11 is a view illustrating the opaque mode, and (d) in FIG. 11 is a view illustrating a light off mode.

A display panel 1100 in FIG. 11 can include an outermost LCD panel 1101, an LCD backlight module 1102, and an internal LED 1103. In this regard, the LCD backlight module 1102 can be located at the rear of the LCD panel 1101 and emit light. In addition, although the internal LED 1103 in FIG. 11 is shown as being located at each of both left and right side ends of the display panel 1100, this is only an example. The internal LED 1103 can be shown differently in subsequent drawings.

In order to operate in the transparent mode as shown in (a) in FIG. 11, the display panel 1100 can turn on only the internal LED 1103.

In addition, in order to operate in the translucent mode as shown in (b) in FIG. 11, the display panel 1100 can turn on both the LCD backlight module 1102 and the internal LED 1103. In this regard, the display panel 1100 can execute the translucent mode via brightness adjustment of the LCD backlight module 1102 and the internal LED 1103.

In addition, in order to operate in the opaque mode as shown in (c) in FIG. 11, the display panel 1100 can turn on only the LCD backlight module 1102.

Lastly, in order to operate in the light off mode as shown in (d) in FIG. 11, the display panel 1100 can turn off both the LCD backlight module 1102 and the internal LED 1103. Accordingly, an image being output on the display panel 110 becomes almost invisible.

FIG. 12 is a view for illustrating locations of a light guide plate and a light source of an LED door according to an embodiment of the present disclosure. Hereinafter, descriptions duplicate with those of the above drawings will be omitted.

(a) to (d) in FIG. 12 are views showing a front surface of a door equipped with light sources among the doors of the refrigerator described above. In particular, (a) to (d) in FIG. 12 show a door with different locations of the light sources. In this regard, (a) to (d) in FIG. 12 mainly illustrate an arrangement of the light sources. The front plate, the light guide plate, and the like will be omitted because it has been described above in FIG. 6 that the front plate, the light guide plate, and the like are naturally included to guide the light output from the light source.

More specifically, (a) in FIG. 12 shows an embodiment in which the light sources are located at a lower edge, (b) in FIG. 12 shows an embodiment in which the light source are located at a side edge, (c) in FIG. 12 shows an embodiment in which the light sources are located at the lower and side edges, and (d) in FIG. 12 shows an embodiment in which the light sources are located perpendicular to the front plate of the door. In this regard, the locations of the light sources are merely an example, and the light sources can be located at an upper edge or at a right side.

Accordingly, because the light sources are located at the lower edge in (a) in FIG. 12, when the light is irradiated from the light sources, the light guide plate can transmit the light irradiated from in an upward direction to the front plate. In this regard, as shown in (a) in FIG. 12, the controller of the refrigerator can turn on only some light sources 1201 among a plurality of light sources 1200 arranged at the lower edge. In this case, from a user's point of view, only a first region 1202 is seen in the first color, not the light is emitted from the door front surface.

Similarly, in (b) in FIG. 12, because the light sources are located at the side edge, when the light is irradiated from the light sources, the light guide plate can transmit the light irradiated in a rightward direction to the front plate. Similarly, as shown in (b) in FIG. 12, the controller of the refrigerator can turn on only some light sources 1204 among a plurality of light sources 1203 arranged at the left side. In this case, from the user's point of view, only a second region 1205 is seen in the second color, not the light is emitted from the door front surface.

When the light sources are located at both the lower edge and the left side edge, as shown in (c) in FIG. 12, both the embodiments in (a) and (b) in FIG. 12 can be included. In one embodiment, the controller of the refrigerator can allow some light sources 1201 of the light sources 1200 located at the lower edge and some light sources 1204 of the light sources 1203 located at the left side to emit light of different colors. In this case, from the user's point of view, it appears that different colors are output from a third region 1206, a fourth region 1207, and a fifth region 1208.

Finally, as shown in (d) in FIG. 12, the light sources can be located perpendicular to the front plate. That is, the light sources are not located at the bottom or the side of the door to irradiate light in an x-axis direction or a y-axis direction, but are located perpendicular to the door to irradiate light in a z-axis direction. This can be referred to as a direct-type structure.

In one embodiment, the controller of the refrigerator can output different colors from a sixth region 1209, a seventh region 1210, and an eighth region 1211 by individually controlling the light sources located on the front surface of the door. Accordingly, the user can see that the different colors are output from the sixth region 1209, the seventh region 1210, and the eighth region 1211.

In addition, the light sources shown in (a) to (d) in FIG. 12 are the LED light that can represent RGB colors.

Therefore, the refrigerator according to an embodiment of the present disclosure can achieve various lighting effects based on the arrangement of the light sources. In addition, there is an advantage that various information related to the refrigerator can be displayed by utilizing the same. Hereinafter, an embodiment for displaying the various information will be described in detail.

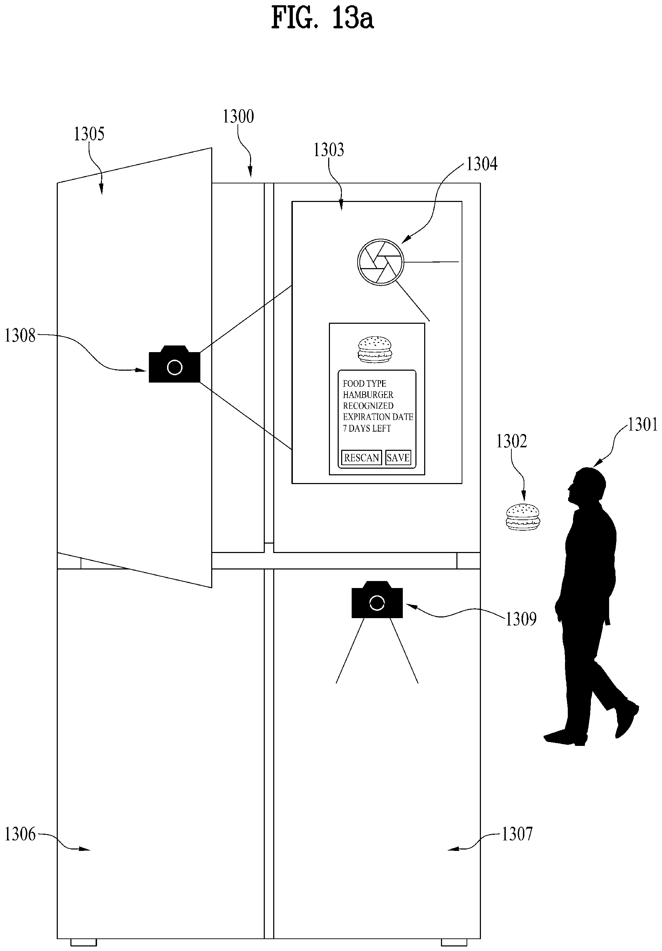

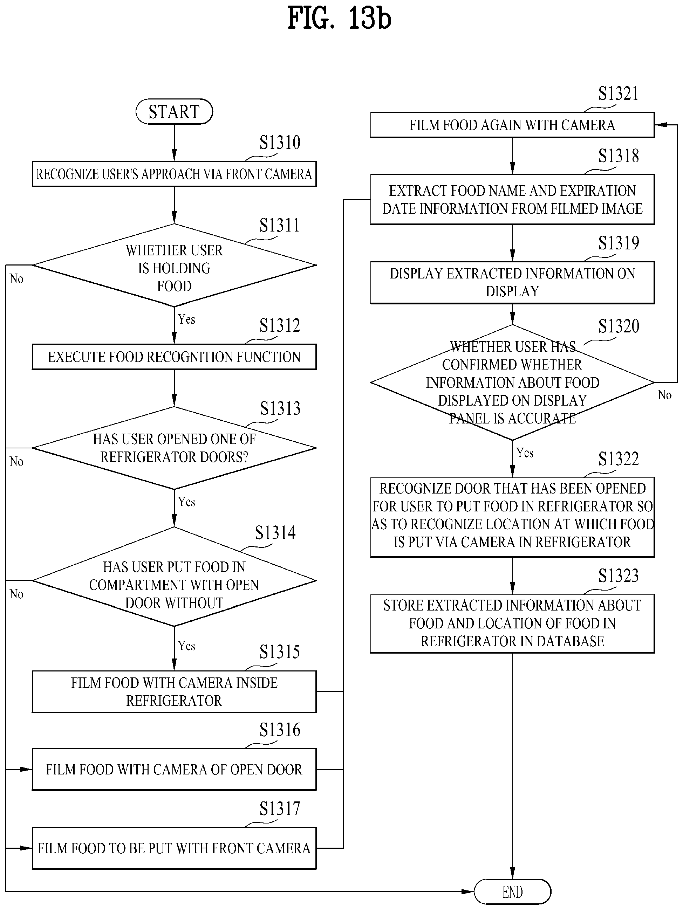

FIGS. 13a and 13b are views for illustrating a method for recognizing food in a refrigerator according to an embodiment of the present disclosure. Hereinafter, descriptions duplicate with those of the above drawings will be omitted.

That is, in order to display the various information related to the refrigerator by changing the color of the LED door according to the above-described embodiment, the refrigerator needs to first recognize information about food stored in the refrigerator.

FIG. 13a shows a scene of use by an actual user, and FIG. 13B shows a flowchart for recognizing the food in the refrigerator.

Referring to FIG. 13a, a user 1301 can approach a refrigerator 1300 holding food 1302. In one embodiment, a display door 1303, which is an upper right door of the refrigerator, can include a front camera 1304. The front camera 1304 can sense that the user 1301 approaches the refrigerator 1300 with the food 1302.

In one embodiment of the present disclosure, the refrigerator 1300 can include the front camera 1304 on the display door 1303, and at least one of a first door 1305, a second door 1306, and a third door 1307 can include a camera 1308 and can include an internal camera 1309 that films an interior of the refrigerator.

In this regard, the refrigerator 1300 can include a camera for filming the food. At least one camera can be included in the display door 1303, the first door 1305, the second door 1306, the third door 1307, and the refrigerator 1300.

That is, in the embodiment in FIG. 13a, the front camera 1304 disposed on the display door 103, the door camera 1308 disposed on the first door 1305, and the internal camera 1309 disposed in a refrigerator compartment corresponding to the third door 1307 are shown, but this is only an option. A camera for filming the food can be optionally disposed.

Thereafter, the refrigerator according to an embodiment of the present disclosure can recognize the food based on a flow in FIG. 13b.

Referring to FIG. 13b, in operation (S1310), the refrigerator can recognize the user's approach via the front camera disposed on the display door.

In operation (S1311), the refrigerator can determine whether the user is holding the food in an image recognized via the front camera. In this regard, the display door of the refrigerator can include the front camera. In this regard, when the user is not holding the food, the flow ends.

When the user is holding the food in the image recognized via the camera, in operation (S1312), the refrigerator can execute a food recognition function via the display door.

In operation (S1313), the refrigerator can determine whether the user has opened one of the refrigerator doors. The refrigerator according to one embodiment of the present disclosure can include the Android-applied display door and three LED doors having the LEDs as the light sources. The refrigerator can determine which door among the display door, the first door, the second door, and the third door the user has opened.

When the user has not opened the refrigerator door, operation (S1317) can be performed.

When the user opens the refrigerator door, in operation (S1314), whether the user has put the food in the refrigerator compartment with the open door without the food recognition and then closed the door can be identified.

When the user has put the food into the refrigerator compartment with the open door without the food recognition and then closed the door, in operation (S1315), the food can be filmed via the camera in the refrigerator of the corresponding refrigerator compartment.

When the user has put the food in the refrigerator compartment with the open door without the food recognition and then has not closed the door, in operation (S1316), the food can be filmed via the camera of the open door. That is, in one embodiment of the present disclosure, not only the display door can be equipped with the front camera to identify whether the user is approaching, whether the user is holding the food, and information about the food, but also each door is equipped with a camera capable of filming the food while the door is opened, and the camera is also disposed inside the refrigerator to film the food in the refrigerator.

In operation (S1317), when the user has not opened the refrigerator door, the refrigerator can film the food the user is holding with the front camera.

When the food is filmed through operation (S1315) to operation (S1317), in operation (S1318), the refrigerator can extract the information about the food from the filmed image. In this regard, the information about the food can include a name of the food and expiration date information of the food.

In operation (S1319), the refrigerator can display the extracted information about the food on the display panel of the display door. Thereafter, the refrigerator can receive a user input on whether the information about the food displayed on the display panel is accurate from the user.

In operation (S1320), when the user confirms that the information about the food displayed on the display panel is accurate, operation (S1322) is performed, and when the user confirms that the information is not accurate, operation (S1321) can be performed.

When the user confirms that the information is not accurate, in operation (S1321), the food can be filmed again with the camera. In this regard, the food can be filmed via the camera in operation (S1315) to operation (S1317).

In addition, when the user determines that the information about the food is not accurate even though operation (S1320) and operation (S1321) are repeatedly performed, the user can directly input the information about the food via the display panel.

When the user confirms that the information about the food output on the display panel is accurate, in operation (S1322), the door that has been opened for the user to put the food in the refrigerator can be recognized, so that a location at which the food is put can be recognized via the camera in the refrigerator of the corresponding door.

In operation (S1323), the information about the food and the location of the food in the refrigerator can be stored in a database of the food.

An embodiment to be described later can be illustrated based on the information about the food and the location of the food in the refrigerator recognized through FIGS. 13a and 13b.

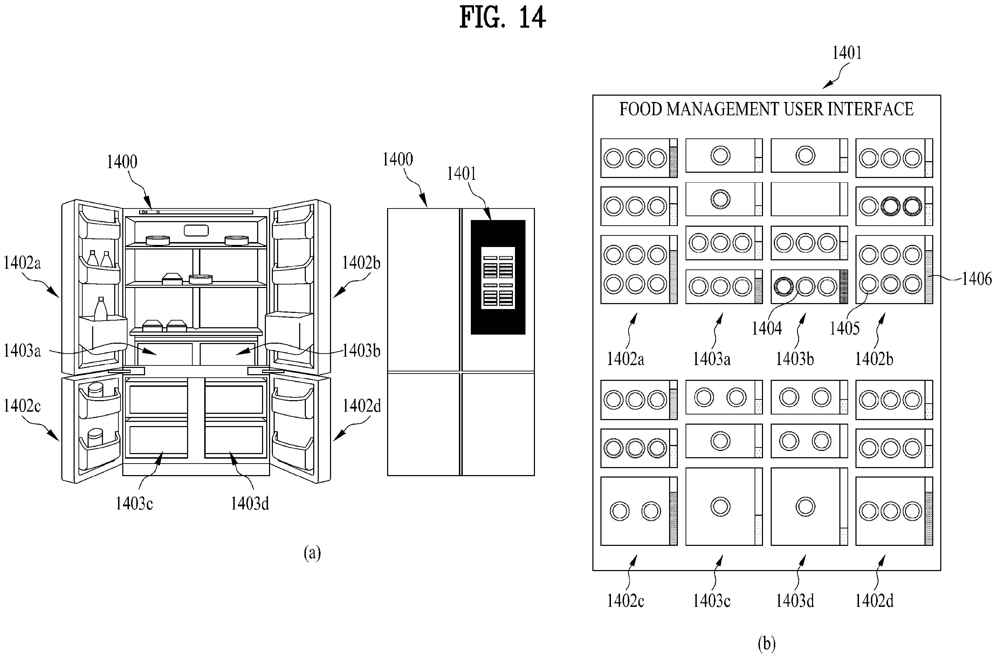

FIG. 14 is a view illustrating a food management user interface of a refrigerator according to an embodiment of the present disclosure. Hereinafter, any description that is redundant with the above will be omitted.

Because a refrigerator 1400 of an embodiment of the present disclosure includes a display door equipped with a display panel 1401 that may output content, various information may be output via the display panel 1401.

Accordingly, the present disclosure seeks to provide a food management user interface that is easy to cognitively understand by mapping with a structure of refrigerator storage compartments and allows a state of food and a storage amount of each storage compartment to be identified at a glance.

That is, actual arrangement and size of the food doors and the food storage compartments of the refrigerator 1400 as in (a) in FIG. 14 may be output via the food management user interface on the display panel 1401 as in (b) in FIG. 14.

More specifically, the food management user interface in (b) in FOG. 14 may output door compartments 1402a, 1402b, 1402c, and 1402d of the refrigerator 1400 and storage compartments 1403a, 1403b, 1403c, and 1403d of the refrigerator 1400 in a distinguished manner. This reflects the fact that user generally uses upper door compartments 1402a and 1402b and the storage compartments 1403a and 1403b of the refrigerator 1400 primarily for storing refrigerated food, and uses lower door compartments 1402c and 1402d and the storage compartments 1403c and 1403d of the refrigerator 1400 primarily for storing frozen food.

In an embodiment, the refrigerator 1400 may display expiration date information 1404 of the food, an image 1405 of each food, and a food storage amount 1406 of a compartment in which corresponding food is stored via a food management user interface 1401.

To this end, the refrigerator 1400 may display at least one food item in the door compartments 1402a, 1402b, 1402c, and 1402d and the storage compartments 1403a, 1403b, 1403c, and 1403d with an indicator 1405. In the embodiment in FIG. 14, the food is displayed with the circular indicator 1405. In another embodiment, the refrigerator 1400 may display the food with an image. Here, the image may correspond to a photographed actual image or a schematic virtual image.

In addition, the refrigerator 1400 may output the expiration date information 1404 of the food via the food management user interface 1401. In an embodiment, the refrigerator 1400 may output the expiration date information 1404 of the food in different colors. With the above-described embodiment, the refrigerator 1400 stores the expiration date information of the food in a database, so that food nearing its expiration date and food that has passed its expiration date may be determined via comparison with a current date.

Accordingly, the refrigerator 1400 may output indicators of the food nearing its expiration date and the food that has passed its expiration date in different colors. For example, the refrigerator 1400 may display an indicator 1404 of the food nearing its expiration date in yellow, and display an indicator 1404 of the food that has passed its expiration date in red. Accordingly, the user may immediately know which food is nearing its expiration date and which has passed its expiration date in which compartment.

In addition, the refrigerator 1400 may display the food storage amount 1406 of the compartment where the food is stored. In this regard, the food storage amount 1406 may be output as an indicator 1406 in a form of a progress bar. More specifically, the food storage amount 1406 corresponds to a percentage (%) unit value of an amount of food stored in each of the door compartments 1402a, 1402b, 1402c, and 1402d and the storage compartments 1403a, 1403b, 1403c, and 1403d in units of the compartment.

For example, when an amount of food stored in the upper right door compartment 1402b of the refrigerator 1400 is 80%, the refrigerator 1400 may notify the user of the amount via the storage amount indicator 1406. In this regard, the storage amount indicator 1406 may indicate 80%.

That is, the user may intuitively know the expiration date information of the food and the food storage amount in each compartment via the food management user interface 1401 being output on the display panel 1401.

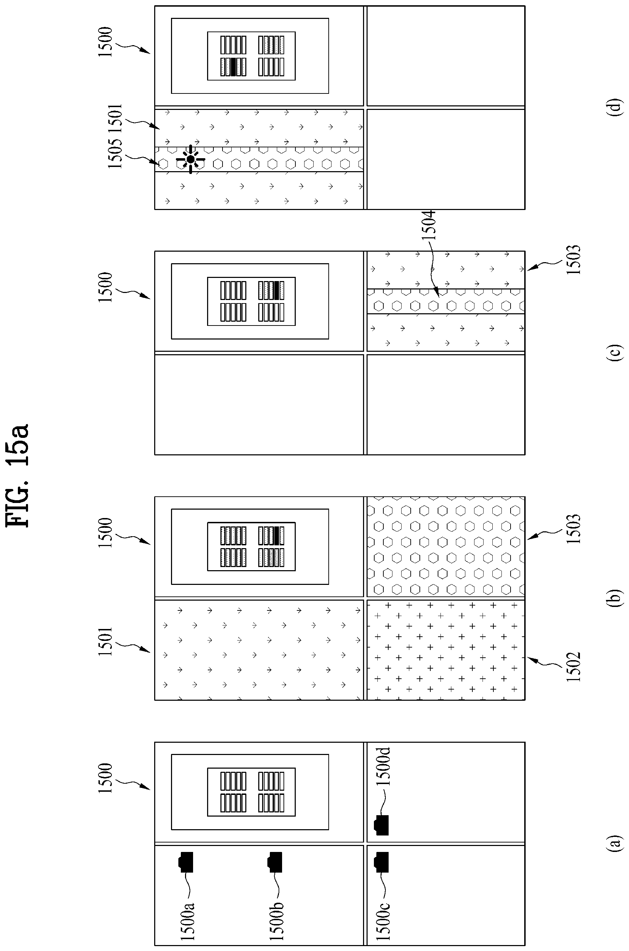

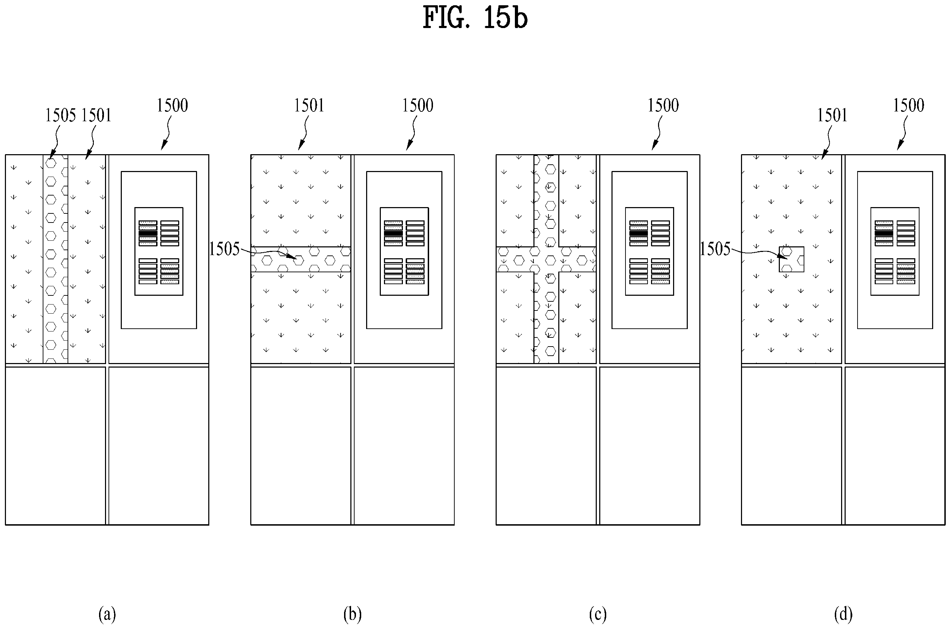

FIGS. 15a and 15b are views illustrating an embodiment of changing a door color based on freshness of food in a refrigerator according to an embodiment of the present disclosure. Hereinafter, any description that is redundant with the above-described embodiment will be omitted.

Referring to (a) in FIG. 15a, a refrigerator 1500 may recognize food via at least one camera 1500a, 1500b, 1500c, and 1500d included in the refrigerator 1500, and may store the information on the location and the expiration date of the food in the database with the above-described embodiment. Here, a location of the at least one camera 1500a, 1500b, 1500c, and 1500d is merely an example, and it is obvious that the cameras may be installed at other locations to accurately identify the location of the food.

Referring to (b) in FIG. 15a, the refrigerator 1500 may change a color of at least one of a first door 1501, a second door 1502, and a third door 1503 based on the expiration date of the food stored in the refrigerator 1500.

More specifically, when food that has a first period (e.g., one week) or more left is stored in the first door 1501, the refrigerator 1500 may change the color of the first door 1501 to a first color (e.g., green). This is a result of control of the refrigerator 1500 setting a color of light output from a light source located at a lower end of the first door 1501 to green. For this, refer to the above-described drawing.

In addition, when food that has less than the first period left is stored in the second door 1502, the refrigerator 1500 may change the color of the second door 1502 to a second color (e.g., yellow).

Similarly, when food that has passed its expiration date is stored in the third door 1503, the refrigerator 1500 may change the color of the third door 1503 to a third color (e.g., red).

In an embodiment, the refrigerator 1500 may change the first period, the first color, the second color, and the third color based on user settings. In addition, the first period, the first color, the second color, and the third color may be determined at a time of manufacturing and then the refrigerator may be shipped.

That is, a color of a door of a compartment containing the food nearing its expiration date may be changed to a caution color, and a color of a door of a compartment containing the food that has passed its expiration date may be changed to a warning color. Accordingly, the user may easily identify the expiration date information.

In addition, in an embodiment, the location of the food nearing its expiration date or that has passed its expiration date may be indicated more specifically. Referring to (c) in FIG. 15a, when the food that has passed its expiration date is stored in the third door 1503, the refrigerator 1500 may specifically change only a color of an area where the food is located. That is, when the food that has passed its expiration date is stored at a first location 1504 of the third door 1503, the refrigerator 1500 may change the color of the third door 1503 to the first color and change a color of the first location 1504 to the third color.

In addition, when only the color of the door is changed, the user is not able to clearly know whether the food that has passed its expiration date is in the door compartment or the storage compartment. To distinguish this, referring to (d) in FIG. 15a, when the food that has passed its expiration date is stored in the first door 1501, the refrigerator 1500 may change the color of an entirety of the first door 1501 to the first color as in (c) in FIG. 15a, but change a color of a second location 1505 to the third color.

Thereafter, when the food that has passed its expiration date is stored in a door compartment of the first door 1501, the refrigerator 1500 may output an indicator that blinks once at the second location 1505 of the first door 1501. On the other hand, when the food that has passed its expiration date is stored in a storage compartment of the first door 1501, the refrigerator 1500 may output an indicator that blinks twice at the second location 1505 of the first door 1501. Such output of the blinking indicator may be applied when the light source has a downward-directed structure.

In addition, referring to (a) in FIG. 15b, when the food that has passed its expiration date is located at the second location 1505 of the first door 1501, the refrigerator 1500 may output a darker color of light at the second location 1505 as the expiration date of the food passes for a longer period.

As described above in FIG. 12, the light source of the door of the refrigerator 1500 according to an embodiment of the present disclosure may have one of the lower edge structure, the side edge structure, the lower-and-side-edge structure, and the downward-directed structure. Accordingly, the refrigerator 1500 may output a different color only in a partial area by adjusting the light source. This will be described again in FIG. 15b. In addition, (b) to (d) in FIG. 15b all assume that the food that has passed its expiration date is located at the second location 1505 of the first door 1501 of the refrigerator 1500.

(b) in FIG. 15b is a view showing the location of the food that has passed its expiration date when using the side edge-type light source structure, (c) in FIG. 15b is a view showing the location of the food that has passed its expiration date when using the lower-and-side edge-type light source structure, and (d) in FIG. 15b is a view showing the location of the food that has passed its expiration date when using the downward-directed light source structure.

In addition, the display door including the display panel, not the door including the LED light source of the refrigerator 1500, may output the food management user interface as described above in FIG. 14. A description thereof will be omitted.

In existing appliances with a storage space such as the refrigerator, the door had to be opened to check an internal state. Therefore, a refrigerator to be proposed is to allow the internal state of the refrigerator to be checked via the door by inputting a knock gesture to at least one of the doors without opening the refrigerator door.

The refrigerator according to an embodiment of the present disclosure is characterized by a component that displays information of interior of the refrigerator as the knock gesture is input.

In particular, because the display door of the refrigerator according to an embodiment of the present disclosure includes the display panel that may switch between a transparent mode, a translucent mode, and an opaque mode, it is to propose an embodiment that outputs various user interfaces on the display panel based on the knock gesture.

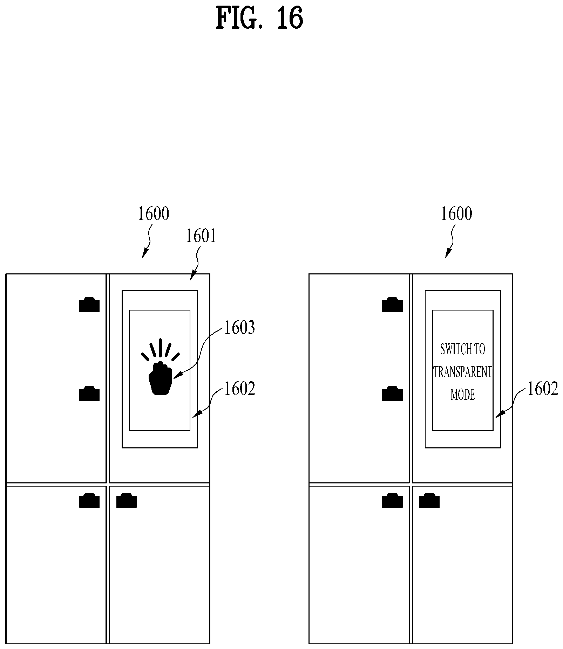

Because the display panel has the transparent mode, the translucent mode, and the opaque mode, when receiving the knock gesture from the user, the refrigerator may quickly switch between the transparent mode, the translucent mode, and the opaque mode of the display panel. This will be described in detail in FIG. 16.

In addition, because the refrigerator according to an embodiment of the present disclosure includes the first door, the second door, and the third door that include the LED light sources, information on the food inside the refrigerator may be roughly determined based on the color of light output from the LED light source even from the door that is not able to be seen through.

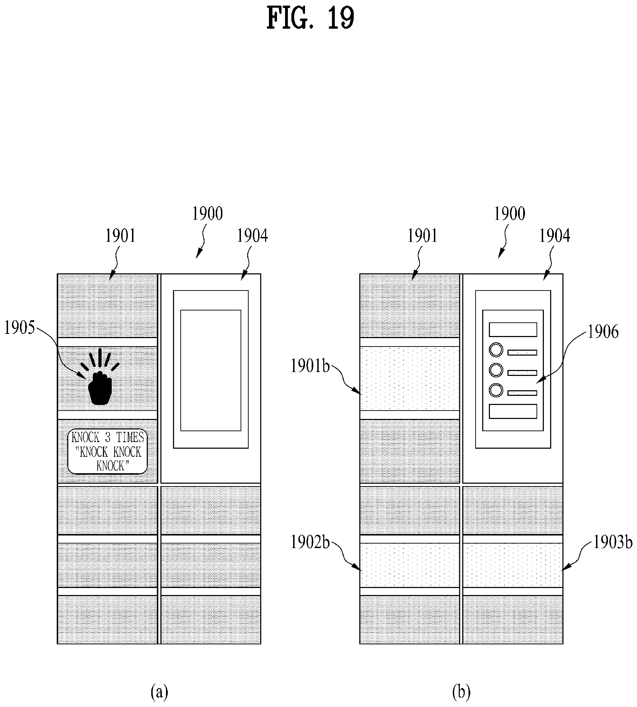

Additionally, in an embodiment, the refrigerator may provide different information for each user based on an action of the received knock gesture. This will be described in detail in FIG. 19.

FIG. 16 is a view illustrating an embodiment of switching a mode of a display panel to a transparent mode based on a knock gesture in a refrigerator according to an embodiment of the present disclosure. Hereinafter, any description that is redundant with the above will be omitted.

Referring to FIG. 16, when a knock gesture 1603 is sensed on a display door 1601, a refrigerator 1600 may switch a mode of a display panel 1602 to a transparent mode. Here, the transparent mode is one of the modes of the display panel 1602 described above via FIGS. 10 and 11.

More specifically, the refrigerator 1600 may sense the knock gesture 1603 on the display door 1601. Here, the knock gesture 1603 may represent a gesture of the user knocking on the door of the refrigerator 1600 with a hand.

In this regard, the refrigerator 1600 may be equipped with a microphone sensor to recognize the knock gesture 1603. In an embodiment, the refrigerator 1600 may be equipped with the microphone sensor in at least one of the first door, the second door, the third door, and the display door 1601. One or more microphone sensors may be equipped inside the refrigerator 1600 to recognize the knock gesture 1603. In this regard, the refrigerator 1600 may determine which door the user knocked on based on a volume of the knock gesture 1603 sensed via the microphone sensor.

In addition, in another embodiment, the refrigerator 1600 may recognize the knock gesture 1603 based on a camera equipped on at least one of the first door, the second door, the third door, and the display door 1601. That is, the refrigerator 1600 may include various sensors to recognize the knock gesture 1603.

In addition, in another embodiment, the refrigerator 1600 may recognize the knock gesture 1603 via a touch sensor of the display panel disposed on the display door 1601. Here, the touch sensor may be included in the display panel when the display panel itself is implemented as a touch screen or a touch pad.

As the refrigerator 1600 switches the mode of the display panel 1602 to the transparent mode based on the knock gesture 1603, the user may check a state of an internal compartment of the refrigerator 1600 corresponding to the display door 1601 via the display panel 1602.

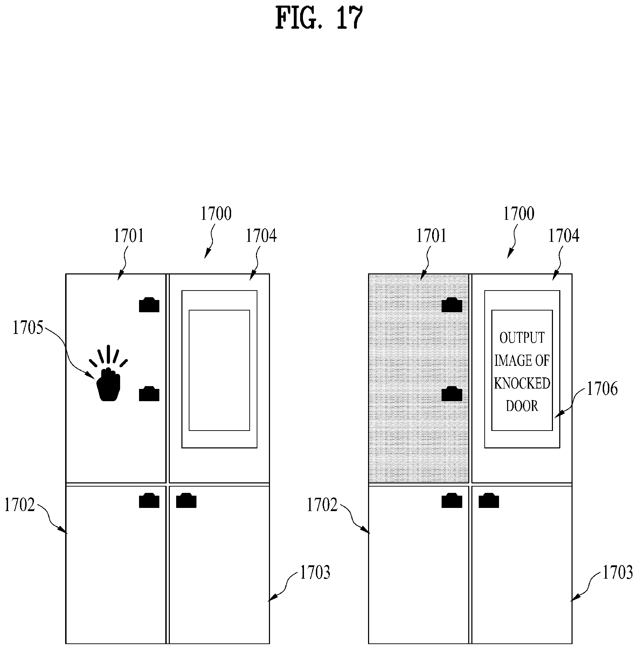

FIG. 17 is a view illustrating an embodiment of outputting an interior image of a refrigerator on a display panel based on a knock gesture in a refrigerator according to an embodiment of the present disclosure. Hereinafter, any description that is redundant with the above will be omitted.

According to the above description, a refrigerator 1700 according to an embodiment of the present disclosure may include a first door 1701, a second door 1702, a third door 1703, and a display door 1704. Here, the first door 1701, the second door 1702, and the third door 1703 may have LEDs that may render RGB colors as light sources.

FIG. 17 illustrates an embodiment in which, unlike FIG. 16, the user inputs a knock gesture 1705 onto one of the first door 1701, the second door 1702, and the third door 1703 instead of onto the display door 1704.

When the knock gesture 1705 is sensed on one of the first door 1701, the second door 1702, and the third door 1703, the refrigerator 1700 may output, on a display panel 1706 of the display door 1704, an internal image of the refrigerator 1700 corresponding to the door on which the knock gesture 1705 is sensed.

For example, when the user inputs the knock gesture 1705 onto the first door 1701, the refrigerator 1700 may output an image of the interior of the refrigerator 1700 corresponding to the first door 1701 on the display panel 1706. To this end, the refrigerator 1700 may include a camera that may capture an internal compartment of the refrigerator 1700 corresponding to the first door 1701. In this regard, the refrigerator 1700 may include at least one camera for capturing internal compartments of the refrigerator 1700 respectively corresponding to the first door 1701, the second door 1702, the third door 1703, and the display door 1704.

In addition, in an embodiment, when the user inputs the knock gesture 1705 onto the first door 1701, the refrigerator 1700 may light-on a light source of the first door 1701 onto which the knock gesture 1705 was input.

Accordingly, as the user inputs the knock gesture 1705 onto the first door 1701, the user may check the internal compartment of the refrigerator 1700 corresponding to the first door 1701 via the display panel 1706.

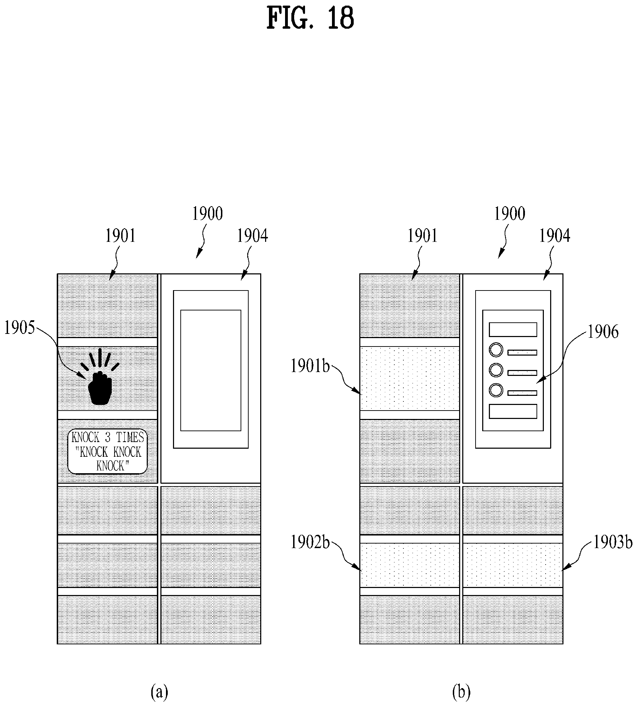

FIG. 18 is a view illustrating an embodiment of changing a color of a door on which a knock gesture is sensed in a refrigerator according to an embodiment of the present disclosure. Hereinafter, any description that is redundant with the above will be omitted.

Referring to (a) in FIG. 18, a refrigerator 1800 may output areas of each storage compartment of the refrigerator 1800 corresponding to each of a first door 1801, a second door 1802, and a third door 1803 in color on the first door 1801, the second door 1802, and the third door 1803 using light sources disposed at rear ends of the first door 1801, the second door 1802, and the third door 1803.

For example, when the storage compartment of the refrigerator 1800 corresponding to the first door 1801 is divided into a first area 1801a, a second area 1801b, and a third area 1801c, the refrigerator 1800 may output light from the light source in colors that may distinguish the first area 1801a, the second area 1801b, and the third area 1801c from each other.

In an embodiment, when a knock gesture 1805 is sensed, the refrigerator 1800 may change a color of a door on which the knock gesture 1805 is sensed. For example, the refrigerator 1800 may change a color of the first door 1801 when the knock gesture 1805 is sensed on the first door 1801.

Referring to (b) in FIG. 18, when sensing the knock gesture 1805, the refrigerator 1800 may output information on food located inside the refrigerator corresponding to the door on which the knock gesture 1805 is sensed.

More specifically, when the knock gesture 1805 is sensed on the first door 1801, the refrigerator 1800 may output information on food located inside the refrigerator corresponding to the first door 1801, by changing the color of the door.

For example, when food items located in the first area 1801a and the third area 1801c have a first period or more left and food located in the second area 1801b has less than the first period left, as the knock gesture 1805 is sensed, the refrigerator 1800 may change colors of the first area 1801a and the third area 1801c of the first door 1801 to a first color, and change a color of the second area 1801b of the first door 1801 to a second color. Here, the first color may correspond to green, and the second color may correspond to yellow.

Accordingly, the user may know that the food located in the second area 1801b of the first door 1801 is nearing its expiration date by knocking on the first door 1801.

In addition, in an embodiment, when the knock gesture 1805 is sensed on the first door 1801, the refrigerator 1800 may output the information on the food located inside the refrigerator corresponding to the first door 1801 on a display panel 1806. In this regard, the refrigerator 1800 may output a shape of the first door 1801 of the refrigerator 1800 on the display panel 1806.

More specifically, the refrigerator 1800 may output information on the food items included in the first area 1801a, the second area 1801b, and the third area 1801c of the first door 1801 on the display panel 1806.

In an embodiment, the refrigerator 1800 may output the first area 1801a on the display panel 1806 in the first color when the food located in the first area 1801a has the first period or more left. Similarly, the refrigerator 1800 may output the third area 1801c in the second color when the food located in the third area 1801c has less than the first period left.

In another embodiment, the refrigerator 1800 may display names of the food items located in the first area 1801a, the second area 1801b, and the third area 1801c on the display panel 1806.

FIG. 19 is a view illustrating an embodiment of changing a color of a partial area of a door mapped to a knock gesture in a refrigerator according to an embodiment of the present disclosure. Hereinafter, any description that is redundant with the above will be omitted.

Referring to (a) in FIG. 19, a refrigerator 1900 may sense a knock gesture 1905 on at least one of a first door, a second door, and a third door.

In this regard, the knock gesture 1905 in FIG. 19 is different from the knock gesture 1805 in FIG. 18. For example, when the knock gesture 1805 in FIG. 18 was knocking of the door of the refrigerator 1800 once, the knock gesture 1905 in FIG. 19 may be knocking of the door of the refrigerator 1900 three times. Such knock gesture 1905 may be determined by user settings in the refrigerator 1900.

Referring to (b) in FIG. 19, when receiving the knock gesture 1905, the refrigerator 1900 may change a color of a door mapped to the knock gesture 1905. In addition, when receiving the knock gesture 1905, the refrigerator 1900 may change a color of at least one partial area of the first door, the second door, and the third door. Here, the at least one partial area is an area mapped to the knock gesture 1905.

More specifically, the knock gesture 1905 may correspond to a gesture mapped to a second area 1901b of the first door, a second area 1902b of the second door, and a second area 1903b of the third door. In this case, the refrigerator 1900 may change colors of the second area 1901b of the first door, the second area 1902b of the second door, and the second area 1903b of the third door when receiving the knock gesture 1905.

In this regard, the mapping between the knock gesture 1905 and the door and between the knock gesture 1905 and the partial areas may be set via a display panel 1906 of the refrigerator 1900.

For example, when the user inputs the knock gesture 1905 three times, the refrigerator 1900 may determine that the second area 1901b of the first door, the second area 1902b of the second door, and the second area 1903b of the third door have been selected, and when the user inputs the knock gesture (not shown) four times, the refrigerator 1900 may determine that a third area of the first door and a third area of the second door have been selected. Accordingly, the refrigerator 1900 may distinguish the knock gesture 1905 and change the color of the door or the color of the partial area of the door mapped to the knock gesture 1905.

In addition, the refrigerator 1900 may change the colors of the second area 1901b of the first door, the second area 1902b of the second door, and the second area 1903b of the third door based on the knock gesture 1905, and at the same time, output information on food items located in the second area 1901b of the first door, the second area 1902b of the second door, and the second area 1903b of the third door on the display panel 1906.

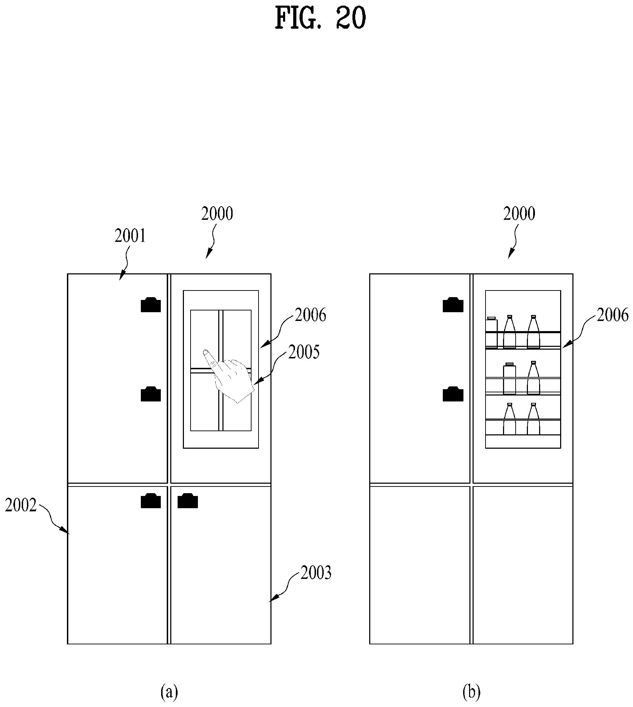

FIG. 20 is a view illustrating an embodiment of outputting an internal image of a refrigerator via a user interface output on a display panel in a refrigerator according to an embodiment of the present disclosure. Hereinafter, any description that is redundant with the above will be omitted.

Referring to (a) in FIG. 20, a refrigerator 2000 may output a user interface representing the refrigerator 2000 on a display panel 2006. In this regard, the refrigerator 2000 may receive an input signal 2005 for selecting one of a first door 2001, a second door 2002, and a third door 2004 in the user interface representing the refrigerator 2000. Here, the input signal 2005 may correspond to a signal of the user touching one of the first door 2001, the second door 2002, and the third door 2004 in the user interface representing the refrigerator 2000 output on the display panel 2006. That is, because the display panel 2006 is a touch-enabled screen, the display panel 2006 may receive a user's touch input signal.

Referring to (b) in FIG. 20, the refrigerator 2000 may output interior of the refrigerator 2000 corresponding to the door, which corresponds to the input signal 2005, via the display panel 2006 based on the input signal 2005.

More specifically, in (a) in FIG. 20, when the refrigerator 2000 receives the input signal 2005 of selecting the first door 2001 in the user interface via the display panel 2006, the refrigerator 2000 may switch a mode of the display panel 2006 to an opaque mode and output the interior of the refrigerator 2000 corresponding to the first door 2001 on the display panel 2006. To this end, the refrigerator 2000 may include an interior camera that captures interior compartments of the refrigerator 2000 corresponding to the first door 2001, the second door 2002, and the third door 2003.

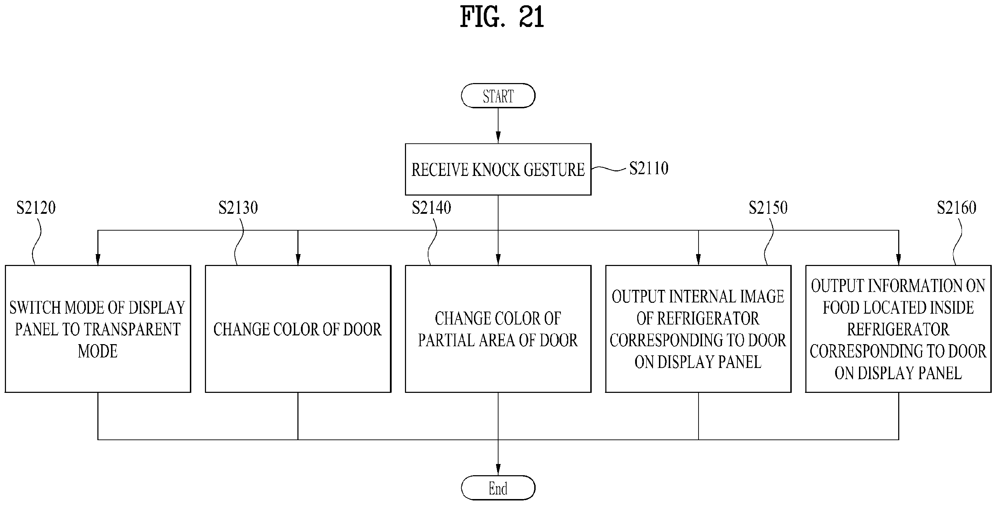

FIG. 21 is a flowchart illustrating a method for controlling a refrigerator according to an embodiment of the present disclosure. Hereinafter, a description that is redundant with the above will be omitted.

In step (S2110), the refrigerator may receive the knock gesture. In this regard, the refrigerator may determine which door the knock gesture was input via the microphone sensor, the camera, and the like.

Upon receiving the knock gesture, the refrigerator may perform one of steps (S2150) to (S2160).

In step (S2120), the refrigerator may switch the mode of the display panel to the transparent mode. In particular, when the knock gesture is received on the display panel, the refrigerator may switch the mode of the display panel to the transparent mode. This is as described above in FIG. 16.

In step (S2130), the refrigerator may change the color of the door. In particular, the refrigerator may change the color of the door from which the knock gesture is received. A method of changing the color of the door is as follows. The refrigerator irradiates light from the LED light source that may render the RGB colors to a light guide plate included in the door, and light irradiated to the light guide plate passes through a front plate included in the door, causing the front plate to emit light with a color. This is as described above in FIG. 18.

In step (S2140), the refrigerator may change the color of the partial area of the door. In particular, the refrigerator may change the color of the partial area of the door based on the information on the food located inside the refrigerator compartment corresponding to the door from which the knock gesture is received. This is as described above in FIGS. 18 and 19.

In step (S2150), the refrigerator may output the internal image of the refrigerator corresponding to the door on the display panel. This is as described above in FIGS. 17 and 20.

In step (S2160), the refrigerator may output the information on the food located inside the refrigerator compartment corresponding to the door from which the knock gesture is received on the display panel. For example, the refrigerator may output the name, the expiration date, and the like of the food located inside the refrigerator compartment corresponding to the door from which the knock gesture is received on the display panel. This is as described above in FIGS. 18 and 19.

In addition, steps (S2120) to (S2160) may be performed in parallel with each other.

Accordingly, by inputting the knock gesture onto the home appliance with the door, the information of the interior may be checked without opening the door. In other words, the user may easily check the state of the food located inside the refrigerator without opening the door. In addition, the refrigerator may provide personalized information (preferred food or the like) by providing different knock gestures for each user.

The above-described present disclosure can be implemented as computer-readable code on a computer-readable medium in which a program is recorded. The computer-readable medium can be any type of recording device in which data that can be read by a computer system is stored. Examples of the computer-readable medium include a hard disk drive (HDD), a solid state drive (SSD), a silicon disk drive (SDD), a read only memory (ROM), a random access memory (RAM), a compact disc (CD)-ROM, a magnetic tape, a floppy disk, an optical data storage, and a carrier wave (e.g., data transmission over the Internet). The computer can include the controller 180 of the terminal. It will be apparent to those skilled in the art that various modifications and variations can be made in the present disclosure without departing from the spirit or scope of the disclosure. The above detailed description is therefore to be construed in all aspects as illustrative and not restrictive. The scope of the present disclosure should be determined by reasonable interpretation of the appended claims and all changes coming within the equivalency range of the present disclosure are intended to be included in the scope of the present disclosure.

### [Industrial Applicability]

The present disclosure relates to the refrigerator and the method for controlling the refrigerator, and has industrial applicability because they may be repeatedly implemented.

## Claims

1. A refrigerator comprising:
a cabinet defining at least one space therein;
a display door configured to open and close the space and composed of a display panel configured to output information;
a first door, a second door, and a third door configured to open and close the space and sense a knock gesture; and
a controller configured to control the display panel,
wherein the controller is configured to:
receive the sensed knock gesture from at least one of the first door, the second door, and the third door; and
perform an operation based on the received knock gesture.

2. The refrigerator of claim 1, wherein the knock gesture is sensed via a microphone sensor.

3. The refrigerator of claim 2, wherein the microphone sensor is mounted in at least one of the first door, the second door, the third door, and the display door.

4. The refrigerator of claim 1, wherein the knock gesture is sensed via a touch sensor.

5. The refrigerator of claim 4, wherein the touch sensor is mounted on at least one of the first door, the second door, the third door, and the display door.

6. The refrigerator of claim 1, wherein the display door is configured to sense the knock gesture,
wherein the controller is configured to:
control the display panel to operate in one of a transparent mode, a translucent mode, and an opaque mode; and
switch a mode of the display panel to the transparent mode when receiving a first knock gesture sensed via the display door.

7. The refrigerator of claim 1, wherein at least one of the first door, the second door, and the third door further includes an internal camera configured to capture interior of the refrigerator,
wherein the controller is configured to, when a sensed second knock gesture is received from one of the first door, the second door, and the third door, output an internal image of the refrigerator corresponding to the door where the second knock gesture is sensed via the display panel.

8. The refrigerator of claim 7, wherein the controller is configured to:
output a user interface representing the refrigerator on the display panel;
receive an input signal for selecting one of the first door, the second door, and the third door in the user interface; and
output an internal image of the refrigerator corresponding to the selected door on the display panel based on the input signal.

9. The refrigerator of claim 1, wherein each of the first door, the second door, and the third door is equipped with a light source capable of rendering RGB colors,
wherein each of the first door, the second door, and the third door includes a front plate and a light guide plate guiding light to the front plate,
wherein the controller is configured to irradiate light to the light guide plate using the light source,
wherein light irradiated to the light guide plate passes through the front plate,
wherein when the light source is turned on, the front plate emits light with a color.

10. The refrigerator of claim 9, wherein the controller is configured to, when receiving a sensed third knock gesture from one of the first door, the second door, and the third door, change a color of the door where the third knock gesture is sensed.

11. The refrigerator of claim 10, wherein the controller is configured to output information on food located inside the refrigerator corresponding to the door where the third knock gesture is sensed on the display panel, based on the third knock gesture.

12. The refrigerator of claim 10, wherein the controller is configured to, when receiving the third knock gesture, change the color of the door where the third knock gesture is sensed based on the information on the food located inside the refrigerator corresponding to the door where the third knock gesture is sensed.

13. The refrigerator of claim 10, wherein the controller is configured to, when receiving a sensed fourth knock gesture from one of the first door, the second door, and the third door, change a color of the door mapped to the fourth knock gesture, wherein the fourth knock gesture is different from the third knock gesture.

14. The refrigerator of claim 13, wherein the controller is configured to, when receiving the fourth knock gesture, change a color of at least one partial area of the first door, the second door, and the third door, wherein the at least one partial area is an area mapped to the fourth knock gesture.

15. The refrigerator of claim 9, wherein the light source included in at least one of the first door, the second door, and the third door has one of a lower edge structure, a side edge structure, a lower-and-side edge structure, and a downward-directed structure.

16. A method for controlling a refrigerator including a cabinet defining at least one space therein, a display door configured to open and close the space and composed of a display panel configured to output information, a first door, a second door, and a third door configured to open and close the space and sense a knock gesture, and a controller configured to control the display panel, the method comprising:
receiving the sensed knock gesture from at least one of the first door, the second door, and the third door; and
performing an operation based on the received knock gesture.
